(19) Europäisches Patentamt
European Patent Office
Office européen des brevets

(11) EP 3 721 985 A1

# (12) EUROPEAN PATENT APPLICATION

(43) Date of publication:
**14.10.2020 Bulletin 2020/42**

(21) Application number: **19167912.5**

(22) Date of filing: **08.04.2019**

(51) Int Cl.:
***B01J 20/26*** *(2006.01)* ***B01J 20/30*** *(2006.01)*
***G01N 27/30*** *(2006.01)* ***C08G 73/02*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Tallinn University of Technology**
**19086 Tallinn (EE)**

(72) Inventors:
- **SÕRITSKI, Vitali**
  **19086 Tallinn (EE)**
- **REUT, Jekaterina**
  **19086 Tallinn (EE)**
- **AYANKOJO, Akinrinade George**
  **19086 Tallinn (EE)**
- **ÖPIK, Andres**
  **19086 Tallinn (EE)**

(74) Representative: **Renaudo, Adrien Hanouar**
**Patendibüroo Käosaar OÜ**
**Tähe 94**
**50107 Tartu (EE)**

## (54) MOLECULARLY IMPRINTED POLYMERS SENSORS FOR SULFONAMIDES

(57) The present invention relates to a sensor for the detection of a sulfonamide. The sensor, preferably a Screen Printed Electrochemical sensor (SPE), has a working electrode coated by a Molecularly Imprinted Polymer (MIP) imprinted by a sulfonamide. The invention also relates to a method for preparing such a sensor and comprising the steps of 1) polymerization of m-PD on the working electrode of the sensor in presence of the sulfonamide; and 2) extraction of sulfonamide molecules from the polymeric layer thereby obtaining a MIP layer.

**FIGURE 1**

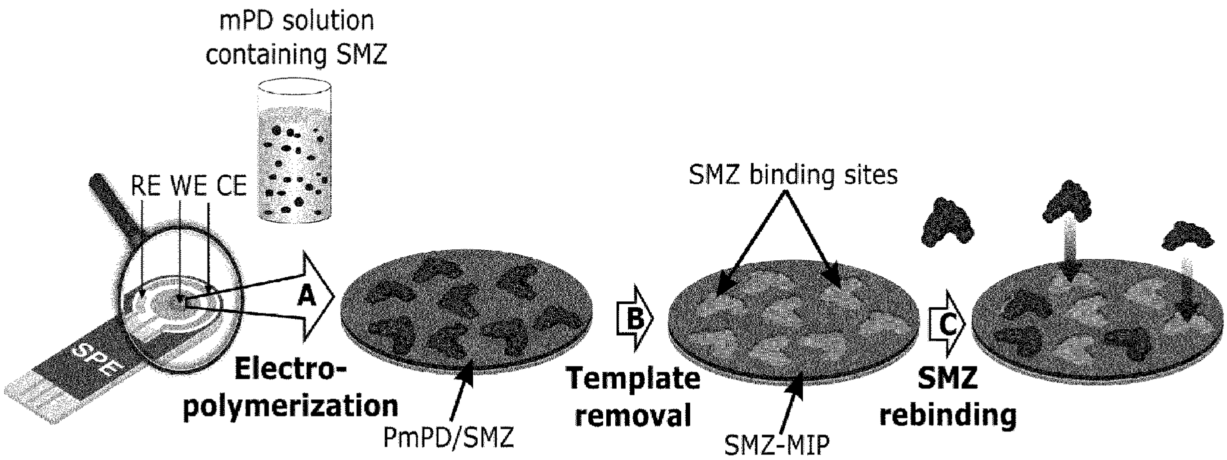


EP 3 721 985 A1

## Description

### *Field of the invention*

The present invention relates to the field of sensors and more particularly to sensors for antibiotic detection. In particular, the invention relates to a sensor coated by a Molecularly Imprinted Polymer specific of a sulfonamide.

### *Background of the invention*

Since their first introduction in clinical applications, antibiotics have saved countless lives, and made most infectious diseases under control. However, the large-scale production and use of antibiotics in clinical and veterinary medicine, agriculture, aquaculture, and horticulture has released significant amount of antibiotics into the environment. Antibiotic contamination has recently been recognized as a worldwide phenomenon (Zhang T et al, Critical Reviews in Environmental Science and Technology, 2011, 41(11): pp. 951-998). The main sources of antibiotic contamination are wastewater from antibiotic manufacturers, large scale animal feeding operations, households, and hospitals. Antibiotics are not only deteriorating environment quality, but they are also responsible for the appearance and rapid spread of resistant bacteria in the environment. Nowadays, antibiotic resistances account for hundreds of thousands of deaths each year. It is therefore a major concern among general public, government officials, and scientists (Davies J et al, Microbiol Mol Biol Rev, 2010, 74(3): pp. 417-33). While attention has initially focused on antibiotic overuse, hospital outbreaks and new drug-resistant superbugs, antibiotics in waterways and soils are now viewed as stoking a rise of antibiotic resistance.

Sulfonamides antibiotics, such as sulfamethizole (SMZ), are a group of synthetic medicines that contain a sulfonamide chemical group. Sulfonamides gradually attracted attention due to their wide applications, easy accumulation and difficult degradation in natural environment. In water bodies, sulfonamides present a poor water solubility and poor volatility. Currently, the phenomenon of sulfonamides in surface and drinking water is universal in the countries all over the world (Jian J et al, IOP Conf. Series: Earth and Environmental Science, 2017, 100(012040)). As a result, there is an urgent need for an effective and selective device for the detection of sulfonamides, especially SMZ, in water.

A wide variety of powerful analytical techniques exists to detect molecules such as sulfonamides. For instance, mass spectrometry, chromatography, solid phase extraction or biosensors have been used for the detection of sulfonamides in the aquatic environment. However, these methods demand complex sample preparation and have a short-term stability. Moreover, the low concentration of sulfonamides found in the environment requires a highly sensitive and selective sensor. The current methods are also time consuming and require bulky equipment, they involve high costs and require highly trained personnel. They are also not portable.

There is thus still an increasing demand nowadays for new sulfonamide sensors, such as SMZ sensors, capable to detect a specific sulfonamide in a liquid sample, in a fast, simple, low-cost, reliable, portable, selective and sensitive way. The present invention meets these and other needs.

### *Summary of the invention*

In search for a miniaturized, portable, simple, cost-effective and sensitive sulfonamide sensor, the inventors tried to combine electrochemical technology with Molecularly Imprinted Polymer technology (MIP). The inventors successfully developed a Screen-Printing Electrochemical sensor (SPE) in which a SMZ specific MIP is coating the working electrode of the SPE.

The inventors developed a sensor with excellent detection abilities, starting from about 2,6 nM and up to about 1 mM, with a Limit of Detection (LOD) of about 0,9 nM and a Limit of Quantitation of about 3 nM. The sensor obtained is also very selective of SMZ with respect to interfering molecules.

Thus, in a first aspect, the invention relates to a Molecularly Imprinted Polymer (MIP) layer coated electrically conductive surface, wherein said MIP layer comprises a m-phenylenediamine (m-PD) polymer and sulfonamide imprints.

In a preferred embodiment, the thickness of the MIP layer is comprised between about 10 and about 15 nm, preferably the thickness of the MIP layer is of about 12,5 nm.

In another preferred embodiment, the electrically conductive surface is made of carbon in any of his conductive forms or of a metal, preferably selected from the list consisting in ruthenium, rhodium, palladium, silver, osmium, iridium, platinum, gold, or a mixture thereof, more preferably the electrically conductive surface is made of gold.

In a second aspect, the invention also relates to a method for preparing a MIP layer coated electrically conductive surface, wherein the MIP layer comprises a m-PD polymer and sulfonamide imprints and wherein the method comprises the following steps:

1) polymerization of m-PD on said electrically conductive surface in the presence of a sulfonamide;
2) extraction of the sulfonamide from the polymeric layer thereby obtaining a sulfonamide imprinted MIP layer coating the electrically conductive surface.

Preferably, the thickness of the MIP layer and the electrically conductive surface are as above described.

In a particular embodiment, the method for preparing a MIP layer coated electrically conductive surface

according to the invention comprises a step of cleaning said electrically conductive surface prior to step 1, preferably the electrically conductive surface is electrochemically cleaned.

The above described step of polymerization of m-PD is preferably an electropolymerization, and preferably comprises the steps of:

- immersing the electrically conductive surface in a solution comprising about 5 mM of m-PD and about 3,5 mM of the sulfonamide; and
- applying to said electrically conductive surface a constant potential of about 0,63 V until an electric charge of about 5 $mC/cm^2$ has been passed through the electrically conductive surface.

The above described step of extracting the sulfonamide from the polymeric layer may comprise the immersion of the MIP layer in an acetic acid-methanol (1:3) mixture for about 16 to about 20 hours under continuous stirring.

The method for preparing a MIP layer coated electrically conductive surface according to the invention may further comprise after step 2, a step of washing the MIP layer coated electrically conductive surface, preferably with water, more preferably with ultra-pure water.

The method for preparing a MIP layer coated electrically conductive surface according to the invention may further comprise after step 2 or after the washing step, a step of drying the MIP layer coated electrically conductive surface, preferably under a nitrogen flow.

In a third aspect, the invention also relates to a MIP layer coated electrically conductive surface directly obtained by the method for preparing a MIP layer coated electrically conductive surface according to the invention.

In a fourth aspect, the invention further relates to a sulfonamide sensor comprising at least one MIP layer coated electrically conductive surface according to the invention.

In a preferred embodiment, the sulfonamide sensor is a Screen Printed Electrochemical sensor (SPE) and the at least one MIP layer coated electrically conductive surface is an electrically conductive surface of the working electrode of said SPE.

In a particular embodiment, the sulfonamide sensor according to the invention has a limit of detection (LOD) of about 0,9 nM and a limit of quantitation (LOQ) of about 3 nM.

In a fifth aspect, the invention still relates to the use of a sulfonamide sensor according to the invention for detecting and/or measuring the concentration of a sulfonamide in a liquid medium.

In a sixth aspect, the invention yet relates to a method of detection of a sulfonamide or of measuring the concentration of a sulfonamide in a liquid medium, the method comprising contacting a sulfonamide sensor according to the invention with said liquid medium.

The liquid medium according to the invention is preferably selected from the list consisting in water sample, slurry sample, liquid dung, snow sample, ice sample, milk sample, preferably cow milk, goat milk or sheep milk, and beverage sample.

In a preferred embodiment, the liquid medium is a water sample, preferably a water sample selected from the list consisting in water body sample, groundwater sample, mineral water sample, drinkable water sample, tap-water sample, wastewater sample such as hospital wastewater sample, treatment plant wastewater sample, sewage water sample, or culture water sample, pipe water sample, tank water sample.

In another preferred embodiment, the water body is selected from the list consisting in sea, ocean, lagoon, bay, gulf, strait, delta, estuary, fjord, river, creek, stream, brook, rill, waterfall, source, spring, drainage basin, lake, pool, pound, puddle, channel, canal, water reservoir, storage pond, impoundment, harbor, glacier, and a wetland such as bog, swamp, marsh, or fen, preferably the water body is selected from the list consisting in river, stream, creek, lake, sea and ocean.

In a particular embodiment, the liquid medium is a sample from a patient or the supernatant of a cell culture medium, preferably a sample from a patient selected from the list consisting in blood sample, plasma sample, serum sample, urine sample, saliva sample, and cerebrospinal fluid sample, more preferably the sample from a patient is a serum sample.

Preferably, the patient according to the invention is a mammal, more preferably a human.

In a preferred embodiment, the sulfonamide according to the invention is an antibiotic sulfonamide, preferably selected from the list consisting in sulfamethizole, sulfisoxazole, sulfanilamide, sulfamethazine, sulfathiazole, sulfadimethoxine, sulfamerazine, sulfacetamide, sulfadiazine, sulfadimidine, sulfafurazole, sulfisomidine, sulfamethoxazole, sulfamoxole, sulfanitran, sulfamethoxypyridazine, sulfamethoxydiazine, sulfadoxine, sulfametopyrazine, terephtyl, sulfafurazole, sulfapyridine, sulfaguanidine, succinylsulfathiazole, phthalysulfathiazole, sulfametomidine, sulfaperin, sulfathiourea, sulfaphenazole, sulfamonomethoxine, derivatives and mixtures thereof, more preferably the sulfonamide is sulfamethizole (SMZ).

In a seventh aspect, the invention finally relates to a method for assessing the pollution of a liquid medium by SMZ, said method comprising the measure of the concentration of SMZ in said liquid medium according to the method of measuring the concentration of SMZ described in the above-mentioned sixth aspect of the invention, a concentration of SMZ in said liquid medium above the PNEC for SMZ being indicative of a pollution of said culture medium.

***Brief Description of the drawings***

***Figure 1: Scheme of the strategy for coating the working electrode of a SPE by a SMZ-MIP layer;*** SMZ is used as the template and m-phenylenediamine (m-PD) as a functional monomer: **A:** electropolymerization of m-PD in the presence of SMZ resulting in a SMZ-Poly m-PD layer; **B:** SMZ extraction thereby obtaining a SMZ-MIP layer; **C:** Rebinding of SMZ to the SMZ-MIP layer.

***Figure 2: Optimization of the electrochemical polymerization and confirmation of SMZ removal from the Poly m-PD layer. A:*** Cyclic voltammetry performed on a gold working electrode in PBS solution or PBS solution containing 3,5 mM SMZ; **B:** Nyquist plots performed in a 1 M KCl solution containing 4 mM of $K_3[Fe(CN)_6]$/K4$[Fe(CN)_6]$ on the bare gold, SMZ-Poly-m-PD electrodeposited on the bare gold (PmPD/SMZ), SMZ-MIP film formed after SMZ removal; ***inset:*** DPV curves performed in the same solution on the PmPD/SMZ and SMZ-MIP layers.

***Figure 3: Thickness Optimization. A:*** The calibration graph representing the dependence of SMZ-MIP film thicknesses on the amount of the charge applied during the electropolymerization of m-PD; **B:** The responses of different thickness of SMZ-MIP normalized to the respective NIP (IF) performed by incubation in 0,32 μM SMZ solution followed by DPV measurements in 1 M KCl solution containing 4 mM of K3[Fe(CN)6]/K4[Fe(CN)6].

***Figure 4: Rebinding study by Differential Pulse Voltammetry. A:*** Typical DPV curves recorded in a 1 M KCl solution containing 4 mM of $K_3[Fe(CN)_6]/K_4[Fe(CN)_6]$ on the SMZ-MIP modified SPE after incubation in solutions of different concentrations of SMZ in PBS buffer; **B:** The binding isotherms of SMZ to the SMZ-MIP and NIP-modified SPEs.

***Figure 5: Limit of Detection (LOD), Limit of Quantitation (LOQ) and selectivity study. A:*** Determination of the LOD and of the LOQ for SMZ-MIP-modified SPE sensors towards SMZ; **B:** The selectivity test of the SMZ-MIP-SPE towards SMZ, sulfanilamide (SA), sulfathiazole (ST), sulfadimethoxine (SD), amoxicillin (AMO) and doxycyline (DOXY) conducted under noncompetitive conditions through incubation in PBS solutions having 0,32 μM of each analyte.

## *Detailed Description of the Invention*

The inventors have developed a sulfonamide sensor combining an electrochemical sensor with a sulfonamide specific MIP. More specifically, the inventors have made a SPE sensor in which a SMZ specific MIP is coating the working electrode of the SPE. To our knowledge, this is the first time that a SPE-MIP sensor is used to detect SMZ, or even sulfonamides. The SMZ sensor of the invention is not only miniaturized, portable, simple, and cost-effective, it is also very sensitive and specific for SMZ, making it of prime interest for the detection of waterborne SMZ pollutants.

It is to be understood that the terminology used herein is for the purpose of describing particular embodiments only and is not intended to be limiting.

Unless defined otherwise, all technical and scientific terms used herein have the same meaning as commonly understood to one of ordinary skill in the art to which the present application belongs. Although any methods and materials similar or equivalent to those described herein can be used in the practice or testing of the present application, representative methods and materials are herein described.

As used herein, the terms "a", "an", and "the" refer to "one or more" when used in this application, including the claims. Thus, for example, reference to "a sulfonamide" includes mixtures of one or more sulfonamides, two or more sulfonamide, and the like.

Unless otherwise indicated, all numbers expressing quantities of ingredients, reaction conditions, and so forth used in the specification and claims are to be understood as being modified in all instances by the term "about". As used herein, the term "about" when referring to a measurable value such as an amount of weight, time, dose, etc. is meant to encompass in one example variations of ± 20%, preferably ± 10%, more preferably ± 5%, alternatively ± 2%, still alternatively ± 1% and yet alternatively ± 0,1% from the specified amount. For example, "about 20" include all the values ranging from ± 5% of 20, i.e. a range of values from 19 to 21.

In a first aspect, the invention relates to a Molecularly Imprinted Polymer (MIP) layer imprinted with a sulfonamide.

As used herein the term "Molecularly Imprinted Polymer" or "MIP" refers to functional monomers polymerized in the presence of a template molecule to form a cast-like shell. The template molecules, i.e. sulfonamide molecules in the present invention, are to be removed after polymerization. At the end of the process, the MIP contains binding sites, the imprints, which are complementary to the target molecules, i.e. the sulfonamide molecules in the present invention, with respect to size, shape, position of functional groups, and which are kept in place by the polymer matrix. Substantially, a molecular memory, that can selectively bind targets, is imprinted in the polymer (K. Haupt, Nature Materials, 9 (2010) 612-614). The robust nature of MIPs, the ease and low cost of its fabrication on sensor surfaces make it an ideal recognition layer for combining with electrochemical sensors.

As used herein, the term "Molecularly Imprinted Polymer Layer" or "MIP layer" refers to a layer comprising polymerized m-phenylenediamine (m-PD). In a preferred embodiment, the MIP layer is essentially constituted of polymerized m-PD (Poly-m-PD).

As used herein, the terms "m-phenylenediamine", "m-PD", "1,3-diaminobenzene", and "Benzene-1,3-diamine" are equivalent and refer to an organic compound with the formula $C_6H_4(NH_2)_2$ and the following chemical structure:

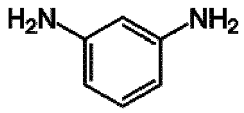

m-phenylenediamine must be distinguished from o-phenylenediamine and p-phenylenediamine which are its isomers.

The MIP layer may comprise other molecules, for examples additives, copolymers, or solvents. Preferably, the MIP layer is essentially constituted of Poly-m-PD, which means that at least about 70%, preferably at least about 80%, more preferably at least about 90%, still preferably at least about 95%, even more preferably at least about 99% of its composition in mass is Poly-m-PD.

The MIP layer according to the invention is imprinted by a sulfonamide. As used, herein the terms "sulfonamide", "sulfonamide compound", "sulphonamide", "sulphonamide compound", "sulfa drug" and "sulpha drug" are equivalent and refer to a family of drugs sharing a sulfonamide functional group, or a group derivating from a sulfonamide functional group. The term "sulfonamide functional group" or "sulphonamide functional group", as used herein, refers to a functional group having the following formula: $S(=O)_2-NH_2$. The sulfonamides therefore encompass molecules of the general formula $RSO_2NH_2$ where R can be any group of atoms, including a hydrocarbon side chain, as well as molecules of the following general formula:

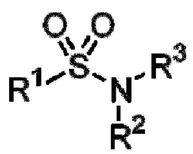

where $R^1$, $R^2$ and $R^3$ are any group of atoms, including hydrocarbon side chains.

Sulfonamides according to the invention can be selected from the list consisting in anti-diabetic sulfonamides, diuretic sulfonamides, anticonvulsant sulfonamides, dermatological sulfonamides, antiretroviral sulfonamides, antiviral sulfonamides, stimulant sulfonamides, antimicrobial sulfonamides, antibiotic sulfonamides, and derivatives thereof.

Sulfonamides according to the invention can also be selected from the list consisting in sultams or cyclic sulfonamides, sulfonamides, disufonimides, sulfonylureas, and derivatives thereof.

Sulfonamides according to the invention can further be selected from the list consisting in sulfafurazole, acetohexamide, carbutamide, chlorpropamide, glibenclamide or glyburide, glibornuride, gliclazide, glyclopyramide, glimepiride, glipizide, gliquidone, glisoxepide, tolazamide, tolbutamide, acetazolamide, bumetanide, chlorthalidone, clopamide, furosemide, hydrochlorothiazide, indapamide, mefruside, metolazone, xipamide, methazolamide, ethoxzolamide, sultiame, zonisamide, mafenide, amprenavir, darunavir, delavirdine, fosamprenavir, tipranavir, asunaprevir, beclabuvir, dasabuvir, grazoprevir, paritaprevir, simeprevir, azabon, apricoxib, bosentan, brinzolamide, celecoxib, dofetilide, dorzolamide, dronedarone, ibutilide, parecoxib, probenecid, sotalol, sulfasalazine, sumatriptan, tamsulosin, udenafil, torsemide, ampiroxicam, camphorsultam, tert-butanesulfinamide, p-toluenesulfinamide, 2,4,6-trimethylbenzenesulfinamide, sulfamethizole, sulfisoxazole, sulfanilamide, sulfamethazine, sulfathiazole, sulfadimethoxine, sulfamerazine, sulfacetamide, sulfadiazine, sulfadimidine, sulfafurazole, sulfisomidine, sulfamethoxazole, sulfamoxole, sulfanitran, sulfamethoxypyridazine, sulfamethoxydiazine, sulfadoxine, sulfametopyrazine, terephtyl, sulfafurazole, sulfapyridine, sulfaguanidine, succinylsulfathiazole, phthalysulfathiazole, sulfametomidine, sulfaperin, sulfathiourea, sulfaphenazole, sulfamonomethoxine, derivatives and mixtures thereof.

Preferably, the sulfonamide according to the invention is an antibiotic sulfonamide, preferably selected from the list consisting in sulfamethizole, sulfisoxazole, sulfanilamide, sulfamethazine, sulfathiazole, sulfadimethoxine, sulfamerazine, sulfacetamide, sulfadiazine, sulfadimidine, sulfafurazole, sulfisomidine, sulfamethoxazole, sulfamoxole, sulfanitran, sulfamethoxypyridazine, sulfamethoxydiazine, sulfadoxine, sulfametopyrazine, terephtyl, sulfafurazole, sulfapyridine, sulfaguanidine, succinylsulfathiazole, phthalysulfathiazole, sulfametomidine, sulfaperin, sulfathiourea, sulfaphenazole, sulfamonomethoxine, derivatives and mixtures thereof, more preferably the sulfonamide is sulfamethizole (SMZ) or a derivative thereof.

In a most preferred embodiment, the sulfonamide according to the invention is the sulfamethizole (SMZ). As used herein, the terms "sulfamethizole", "SMZ", "sulfamethizol", "sulphamethizole", and "rufol" are equivalent and refer to an antibiotic sulfonamide having the following formula $C_9H_{10}N_4O_2S_2$, and the following developed formula:

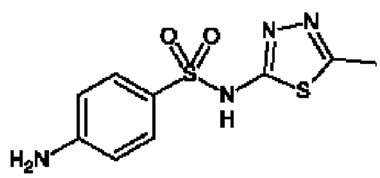

Sulfamethizole is a broad-spectrum sulfonamide and a synthetic analog of the para-aminobenzoic acid (PABA) with antibacterial properties. Sulfamethizole competes with PABA for the bacterial enzyme dihydropteroate synthase, thereby preventing the incorporation

of PABA into dihydrofolic acid, the immediate precursor of folic acid. This leads to an inhibition of bacterial folic acid synthesis and de novo synthesis of purines and pyrimidines, ultimately resulting in cell growth arrest and cell death.

Sulfonamides, such as SMZ, production and use as human and veterinary antibiotics result in its release to the environment through various waste streams (SRC). Sulfonamides are difficult to degrade in the environment, especially in water bodies, since sulfonamides present a poor water solubility and poor volatility. Therefore, sulfonamides tend to accumulate in the natural environment such as rivers and lakes. Currently, the phenomenon of sulfonamides contamination in surface and drinking water is present all over the world (Jian J et al, IOP Conf. Series: Earth and Environmental Science, 2017, 100(012040)).

Derivatives of sulfonamides include but are not limited to their ionic forms, in particular in a liquid medium. For example, SMZ may exist partially in its anionic form in liquid mediums.

In a particular embodiment, the sulfonamide according to the invention is a combination of 2, 3, 4, 5, 6, 7, 8, 9, 10, 11, 12, 13, 14, 15, 16, 17, 18, 19, or 20 sulfonamides, preferably a combination of 2, 3, 4, 5 or 6 antibiotic sulfonamides selected from the list consisting in sulfamethizole, sulfisoxazole, sulfanilamide, sulfamethazine, sulfathiazole, sulfadimethoxine, sulfamerazine, sulfacetamide, sulfadiazine, sulfadimidine, sulfafurazole, sulfisomidine, sulfamethoxazole, sulfamoxole, sulfanitran, sulfamethoxypyridazine, sulfamethoxydiazine, sulfadoxine, sulfametopyrazine, terephtyl, sulfafurazole, sulfapyridine, sulfaguanidine, succinylsulfathiazole, phthalysulfathiazole, sulfametomidine, sulfaperin, sulfathiourea, sulfaphenazole, sulfamonomethoxine, derivatives and mixtures thereof. In case of a combination of sulfonamides imprinting the MIP, each sulfonamide of the combination may account for 1% to 99% of the imprints, providing that the total of the percentages of all the imprint types is equal to 100%.

The MIP layer according to the invention has a certain thickness, size and shape.

In a preferred embodiment, the MIP layer according to the invention has a thickness comprised between about 1 and about 50 nm, preferably between about 5 and about 30 nm, more preferably between about 5 and about 20 nm, even more preferably between about 10 and about 15 nm. In a most preferred embodiment, the thickness of the MIP layer according to the invention is of about 12,5 nm.

In another preferred embodiment, the MIP layer according to the invention has a size comprised between about 1 $nm^2$ and about 10 $cm^2$, preferably between about 1 $\mu m^2$ and about 1 $cm^2$, more preferably between about 10 $\mu m^2$ and about 100 $mm^2$, even more preferably between about 0,1 $mm^2$ and 10 $mm^2$. In a most preferred embodiment, the size of the MIP layer according to the invention is of about 0,80 $mm^2$.

The MIP layer according to the invention can be of any shape. Preferably, it has a rectangular, square or circular shape, more preferably a circular shape.

In a second aspect, the invention also relates to a MIP layer coated electrically conductive surface, said MIP layer comprising a m-phenylenediamine (m-PD) polymer and sulfonamide imprints.

The sulfonamide, the MIP layer and the m-PD are as described in the first aspect above mentioned.

As used herein, the term "MIP layer coated electrically conductive surface" refers to an electrically conductive surface at least partially coated by a MIP layer. As used herein the terms "electrically conductive surface" and "conductor surface" are equivalent and refer to a surface that allows the flow of an electrical current.

The electrically conductive surface according to the invention is made of metal or of carbon in any of his conductive forms. In a first embodiment, the electrically conductive surface is made of carbon in any of his conductive forms such as graphite, pastes or graphite-based inks, carbon fibers or nanotubes, graphene and reduced graphene oxide, carbon black, glassy carbon, doped diamond e.g. Boron-Doped Diamond (BDD), products pyrolized by polymers, including photoresist. In a second and preferred embodiment, the electrically conductive surface is made of metal. The metal according to the invention can be selected from the list consisting in gold, platinum, titanium, silver, copper, aluminum, zinc, nickel, brass, bronze, calcium, beryllium, rhodium, magnesium, molybdenum, iridium, tungsten, cobalt, cadmium, ruthenium, lithium, iron, palladium, tin, selenium, tantalum, niobium, steel, chromium, lead, vanadium, uranium, zirconium, mercury, derivatives and mixtures thereof. The metal according to the invention may be resistant to an oxidation potential equal to about 1 V vs Ag/AgCl, or mixtures of said metals. The metal according to the invention can also be selected from the metals stables upon anodic polarization, e.g. 0,8 V vs Ag/AgCl/KCl sat (i.e. an AgCl coated Ag wire immersed in a saturated solution of KCl). The metal according to the invention may also be a noble metal, i.e. a metal resistant to corrosion and oxidation in moist air. In a preferred embodiment, the metal according to the invention may be selected from the list consisting in ruthenium (Ru), rhodium (Rh), palladium (Pd), silver (Ag), osmium (Os), iridium (Ir), platinum (Pt), gold (Au), mercury (Hg), rhenium (Re), copper (Cu), titanium (Ti), niobium (Nb), tantalum (Ta), derivatives and mixtures thereof. In a most preferred embodiment, the metal according to the invention may be selected from the list consisting in ruthenium (Ru), rhodium (Rh), palladium (Pd), silver (Ag), osmium (Os), iridium (Ir), platinum (Pt), gold (Au), derivatives and mixtures thereof. Said metal mixtures according to the invention can be homogeneous (e. g. alloys) or derived from the assembly of structures or layers of different metals, on nanometric scale too (e.g. nanoparticles). In a most preferred embodiment, the electrically conductive surface according to the invention is made of gold.

The electrically conductive surface according to the invention has a certain shape, size and thickness.

In a preferred embodiment, the electrically conductive surface according to the invention has a size comprised between about 1 $nm^2$ and about 10 $cm^2$, preferably between about 1 $\mu m^2$ and about 1 $cm^2$, more preferably between about 10 $\mu m^2$ and about 100 $mm^2$, even more preferably between about 0,1 $mm^2$ and 10 $mm^2$. In a most preferred embodiment, the size of the electrically conductive surface according to the invention is of about 0,80 $mm^2$.

The electrically conductive surface according to the invention can be of any shape. Preferably, it has a rectangular, square or circular shape, preferably a circular shape.

The thickness of the electrically conductive surface according to the invention has a thickness comprised between about 1 nm and about 1 cm, preferably comprised between about 10 nm and about 100 $\mu$m, more preferably comprised between about 10 nm and about 10 $\mu$m, even more preferably comprised between about 100 nm and about 1 $\mu$m.

The MIP layer according to the invention is at least partially coating the electrically conductive surface. Preferably, the MIP layer is coating the entire electrically conductive surface, i.e. about 100% of the electrically conductive surface. Alternatively, the MIP layer is coating at least 10%, 20%, 30%, 40%, 50%, 60%, 70%, 80%, 90%, 95%, or 99% of the electrically conductive surface, preferably at least 99%. Alternatively, the MIP layer is coating no more than 10%, 20%, 30%, 40%, 50%, 60%, 70%, 80%, 90%, 95%, or 99% of the electrically conductive surface.

When using the MIP layer coated electrically conductive surface for the detection of a sulfonamide in a liquid medium, it is advantageous that the MIP layer covers entirely the electrically conductive surface, or at least the part of the electrically conductive surface used for the detection of said sulfonamide. Indeed, a discontinuous MIP layer would be less efficient for the detection of sulfonamides.

When some parts of the electrically conductive surface are still not coated by the MIP layer, they are preferably coated by blocking agents. As used herein, the term "blocking agent" refers to any agent capable to prevent the non-specific adhesion of molecules, in particular sulfonamides, to the electrically conductive surface. The blocking agent according to the invention can be selected from long-length alkyl chain with thiol functions, preferably starting from C5 alkyls, derivatives and combinations thereof. For example, the blocking agent according to the invention can be 1-Dodecanethiol, MUTEG ((11-Mercaptoundecyl)tetra(ethylene glycol)), or 8-Mercapto-1-octanol. The blocking agent according to the invention can also be selected from grafted aryldiazonium compounds, derivatives and combinations thereof.

In a third aspect, the invention still relates to a sulfonamide electrode, said electrode comprising a MIP layer coated electrically conductive surface, the MIP layer comprising a m-phenylenediamine (m-PD) polymer and sulfonamide imprints.

The sulfonamide, the MIP layer and the m-PD are as described in the first aspect above mentioned. The electrically conductive surface and the MIP layer coated electrically conductive surface are as described in the second aspect above mentioned.

As used herein the term "electrode" refers to an electrical conductor that can be used to make contact with an electrolyte. Therefore, the electrode according to the invention comprises an electrically conductive surface. The electrically conductive surface of the electrode can be made of metal or of carbon in any of his conductive forms, said metal and carbon being as described in the above-mentioned second aspect of the invention. Preferably, the electrically conductive surface is made of gold.

The electrode according to the invention may further comprise a supporting material. Alternatively, the electrode according to the invention do not comprise a supporting material and may therefore consist in an electrically conductive surface.

The supporting material according to the invention is preferably an electrical insulator. According to the invention, the terms "dielectric", "dielectric material", "electrical insulator" or "insulator" are equivalent and refer to a material whose internal electric charges do not flow freely.

When the electrode comprises a supporting material, the electrically conductive surface is at least partially coating the surface of the supporting material. For example, the electrically conductive surface may coat at least 10%, 20%, 30%, 40%, 50%, 60%, 70%, 80%, 90%, 95%, or 99% of the supporting material, preferably at least 99%. Alternatively, the electrically conductive surface may coat no more than 10%, 20%, 30%, 40%, 50%, 60%, 70%, 80%, 90%, 95%, or 99% of the supporting material. In a particular embodiment, the electrically conductive surface coats the entire supporting material, i.e. about 100% of the supporting material.

The supporting material is preferably an electrical insulator. The electrical insulator according to the invention may be selected from the list consisting in ceramics, glass, plastics, mica, metal oxides, paper, Teflon, rubber-like polymers, polymer composite materials, derivatives and mixtures thereof. Polymer composite material may comprise a central rod made of fiber-reinforced plastic and an outer weathershed made of silicone rubber or ethylene propylene diene monomer rubber (EPDM). Preferably, the electrical insulator is a ceramic. For example, a ceramic can be made from clay, quartz, alumina or feldspar. Preferably, the ceramic according to the invention is selected from the list consisting in alumina ceramics, sapphire ceramics, aluminum nitride ceramics, silicon nitride ceramics, cordierite ceramics, mullite ceramics, steatite ceramics, forsterite ceramics, Yttria ceramics, zirconia ceramics, silicon carbide ceramics, cermet ceramics, variants and mixtures thereof. More preferably, the supporting material according to the invention is an alumina ceramic.

In a preferred embodiment, the sulfonamide electrode according to the invention comprises an alumina ceramic supporting material coated with gold.

In another preferred embodiment, the sulfonamide electrode according to the invention is a working electrode. As used herein, the term "working electrode" refers to the electrode of a sulfonamide sensor, preferably a sulfonamide electrochemical sensor, on which the detection of sulfonamides is occurring. The sulfonamide sensor and the sulfonamide electrochemical sensor are as described in the fourth aspect of the invention described below. In a most preferred embodiment, the sulfonamide electrode according to the invention is a working electrode comprising an alumina ceramic supporting material coated with gold.

In a fourth aspect, the invention further relates to a sulfonamide sensor comprising at least one MIP layer, and/or at least one MIP layer coated electrically conductive surface, and/or at least one sulfonamide electrode. Preferably, the invention concerns a sulfonamide sensor comprising one MIP layer, and/or one MIP layer coated electrically conductive surface, and/or one sulfonamide electrode. Alternatively, the invention may concern a sulfonamide sensor comprising several MIP layers, and/or several MIP layer coated electrically conductive surfaces, and/or several sulfonamide electrodes.

The sulfonamide sensor can thus comprise at least one MIP layer, preferably one MIP layer. Alternatively, the sulfonamide sensor may comprise several MIP layers, preferably 2, 3, 4, 5, 6, 7, 8, 9, or 10 MIP layers.

The sulfonamide sensor can also comprise at least one MIP layer coated electrically conductive surface, preferably one MIP layer coated electrically conductive surface. Alternatively, the sulfonamide sensor may comprise several MIP layer coated electrically conductive surfaces, preferably 2, 3, 4, 5, 6, 7, 8, 9, or 10 MIP layer coated electrically conductive surfaces.

The sulfonamide sensor can still comprise at least one sulfonamide electrode, preferably one sulfonamide electrode. Alternatively, the sulfonamide sensor may comprise several sulfonamide electrodes, preferably 2, 3, 4, 5, 6, 7, 8, 9, or 10 sulfonamide electrodes.

The sulfonamide, the MIP layer and the m-PD are as described in the first aspect of the invention above mentioned. The electrically conductive surface and the MIP layer coated electrically conductive surface are as described in the second aspect of the invention above mentioned. The sulfonamide electrode is as described in the third aspect of the invention above mentioned.

As used herein, the terms "sulfonamide sensor" and "sulfonamide detector" are equivalent and refer to a device that detects the liaison of sulfonamides to its MIP layer and responds with a transmitted signal.

Preferably, the sulfonamide sensor according to the invention is an electrochemical sensor. As used herein, the term "electrochemical sensor" refers to a device that give information about the concentration of a sulfonamide in a liquid medium in real time by coupling a sulfonamide selective layer, i.e. a MIP layer imprinted with a sulfonamide, to an electrochemical transducer. In this way, the chemical energy of the selective interaction between the sulfonamide molecules and the sensor is transduced into an analytically useful signal. The liquid medium is as described in the thirtieth aspect of the invention below.

The sulfonamide electrochemical sensor according to the invention may be selected from the list consisting in potentiometric electrochemical sensors in which the electrical magnitude used for transduction of the sulfonamide detection is a change of potential, conductometric electrochemical sensors in which the electrical magnitude used for transduction of the sulfonamide detection is a change of conductance, impedimetric electrochemical sensors in which the electrical magnitude used for transduction of the sulfonamide detection is a change of impedance, voltammetric electrochemical sensors in which the electrical magnitude used for transduction of the sulfonamide detection is a change of current for an electrochemical reaction with the applied voltage, or amperometric electrochemical sensors in which the electrical magnitude used for transduction of the sulfonamide detection is a change of current for an electrochemical reaction with time at a fixed applied potential.

In a preferred embodiment, the sulfonamide electrochemical sensor according to the invention is an amperometric electrochemical sensor. Different amperometric methods may be used to make electrochemical measurements such as normal pulse voltammetry, cyclic voltammetry or differential pulse voltammetry. In a most preferred embodiment, differential pulse voltammetry is the technique used for determining a response from a sulfonamide amperometric electrochemical sensor. As used herein, the terms "differential pulse voltammetry", "DPV", "differential pulse polarography" and "DPP" are equivalent and refer to a voltammetry method used to make electrochemical measurements and a derivative of linear sweep voltammetry or staircase voltammetry, with a series of regular voltage pulses superimposed on the potential linear sweep or stairsteps. The current is measured immediately before each potential change, and the current difference is plotted as a function of potential. By sampling the current just before the potential is changed, the effect of the charging current can be decreased.

The sulfonamide sensor according to the invention, preferably a sulfonamide electrochemical sensor, more preferably an amperometric electrochemical sensor, even more preferably a differential pulse voltammetry electrochemical sensor, may comprise at least one electrically conductive surface, preferably at least two electrically conductive surfaces, more preferably at least three electrically conductive surfaces. Alternatively, the

sulfonamide sensor according to the invention, preferably a sulfonamide electrochemical sensor, more preferably an amperometric electrochemical sensor, even more preferably a differential pulse voltammetry electrochemical sensor, may comprise between 1 and 10 electrically conductive surfaces, preferably between 1 and 5 electrically conductive surfaces, even more preferably between 2 and 4 electrically conductive surfaces. For example, the sulfonamide sensor according to the invention, preferably a sulfonamide electrochemical sensor, more preferably an amperometric electrochemical sensor, even more preferably a differential pulse voltammetry electrochemical sensor, may comprise 1, 2, 3, 4 electrically conductive surfaces. In a most preferred embodiment, the sulfonamide sensor according to the invention, preferably a sulfonamide electrochemical sensor, more preferably an amperometric electrochemical sensor, even more preferably a differential pulse voltammetry electrochemical sensor, comprises three electrically conductive surfaces. The electrically conductive surfaces are as described in the second aspect of the invention above mentioned.

In a preferred embodiment, the MIP layer according to the invention coats at least one electrically conductive surface of the sulfonamide sensor according to the invention, preferably a sulfonamide electrochemical sensor, more preferably an amperometric electrochemical sensor, even more preferably a differential pulse voltammetry electrochemical sensor. In a particular embodiment, the MIP layer according to the invention coats several electrically conductive surfaces, preferably between 2 and 10, more preferably between 2 and 5, even more preferably 2, 3 or 4 electrically conductive surfaces of the sulfonamide sensor according to the invention, preferably a sulfonamide electrochemical sensor, more preferably an amperometric electrochemical sensor, even more preferably a differential pulse voltammetry electrochemical sensor. It is understood that the number of electrically conductive surfaces of the sensor coated by a MIP layer according to the invention cannot be greater than the total number of electrically conducting surfaces of said sensor. In a preferred embodiment, the MIP layer according to the invention coats one electrically conductive surface of the sulfonamide sensor according to the invention, preferably a sulfonamide electrochemical sensor, more preferably an amperometric electrochemical sensor, even more preferably a differential pulse voltammetry electrochemical sensor. In an even preferred embodiment, the sulfonamide sensor according to the invention, preferably a sulfonamide electrochemical sensor, more preferably an amperometric electrochemical sensor, even more preferably a differential pulse voltammetry electrochemical sensor has three electrically conductive surfaces and one is coated by a MIP layer according to the invention. Preferably, the electrically conductive surface coated by the MIP layer is made of gold.

When the sulfonamide sensor according to the invention, preferably a sulfonamide electrochemical sensor, more preferably an amperometric electrochemical sensor, even more preferably a differential pulse voltammetry electrochemical sensor, presents several electrically conductive surfaces coated by a MIP layer, the MIP layers can be imprinted by the same sulfonamide or by different sulfonamides.

Alternatively, the sulfonamide sensor according to the invention, preferably a sulfonamide electrochemical sensor, more preferably an amperometric electrochemical sensor, even more preferably a differential pulse voltammetry electrochemical sensor, may comprise at least one electrode, preferably at least two electrodes, more preferably at least three electrodes. Alternatively, the sulfonamide sensor according to the invention, preferably a sulfonamide electrochemical sensor, more preferably an amperometric electrochemical sensor, even more preferably a differential pulse voltammetry electrochemical sensor, may comprise between 1 and 10 electrodes, preferably between 1 and 5 electrodes, even more preferably between 2 and 4 electrodes. For example, the sulfonamide sensor according to the invention, preferably a sulfonamide electrochemical sensor, more preferably an amperometric electrochemical sensor, even more preferably a differential pulse voltammetry electrochemical sensor, may comprise 1, 2, 3, or 4 electrodes. In a most preferred embodiment, the sulfonamide sensor according to the invention, preferably a sulfonamide electrochemical sensor, more preferably an amperometric electrochemical sensor, even more preferably a differential pulse voltammetry electrochemical sensor, comprises three electrodes. The electrodes are as described in the third aspect of the invention above mentioned.

Preferably, at least one of the electrodes, at least two of the electrodes, at least three of the electrodes of the sulfonamide sensor according to the invention, preferably a sulfonamide electrochemical sensor, more preferably an amperometric electrochemical sensor, even more preferably a differential pulse voltammetry electrochemical sensor is a sulfonamide electrode, preferably a sulfonamide working electrode. The sulfonamide electrodes and sulfonamide working electrodes are as described in the third aspect of the invention above mentioned. In a particular embodiment, several of the electrodes of the sulfonamide sensor according to the invention, preferably a sulfonamide electrochemical sensor, more preferably an amperometric electrochemical sensor, even more preferably a differential pulse voltammetry electrochemical sensor are sulfonamide electrodes, preferably sulfonamide working electrodes, preferably between 2 and 10 of the electrodes are sulfonamide electrodes, preferably sulfonamide working electrodes, more preferably between 2 and 5 of the electrodes are sulfonamide electrodes, preferably sulfonamide working electrodes, even more preferably 2, 3 or 4 of the electrodes are sulfonamide electrodes, preferably sulfonamide working electrodes. It is understood that the

number of sulfonamide electrodes according to the invention cannot be greater than the total number of electrodes of said sensor. In a preferred embodiment, one of the electrodes of the sulfonamide sensor according to the invention, preferably a sulfonamide electrochemical sensor, more preferably an amperometric electrochemical sensor, even more preferably a differential pulse voltammetry electrochemical sensor is a sulfonamide electrode, preferably a sulfonamide working electrode. In an even more preferred embodiment, the sulfonamide sensor according to the invention, preferably a sulfonamide electrochemical sensor, more preferably an amperometric electrochemical sensor, even more preferably a differential pulse voltammetry electrochemical sensor comprises three electrodes and one of them is a sulfonamide electrode, preferably a sulfonamide working electrode, even more preferably a sulfonamide working electrode made of alumina ceramic and gold coated.

When the sulfonamide sensor according to the invention, preferably a sulfonamide electrochemical sensor, more preferably an amperometric electrochemical sensor, even more preferably a differential pulse voltammetry electrochemical sensor, present several sulfonamide electrodes, preferably sulfonamide working electrodes, the MIP layers of the different electrodes, preferably sulfonamide working electrodes, can be imprinted by the same sulfonamide or by different sulfonamides.

In the sulfonamide sensor according to the invention, preferably a sulfonamide electrochemical sensor, more preferably an amperometric electrochemical sensor, even more preferably a differential pulse voltammetry electrochemical sensor, the at least one sulfonamide electrode, preferably the sulfonamide electrode, more preferably the sulfonamide working electrode, can be connected, or is connectable, to an electrically conductive wire, e.g. a copper wire, in turn connected, or connectable, to a suitable current detector composed for example by a potentiostat integrated with a function generator and suitable systems of sampling of the intensity of current/electric charge and of data acquisition/processing. To such end, any potentiostat system of prototype or commercial type, suitable for the control voltage bias between electrodes of an electrochemical cells, can be employed. As used herein, the term "electrochemical cell" refers to a device capable of either generating electrical energy from chemical reactions or using electrical energy to cause chemical reactions. Such electrodes include, without limitation, a working electrode, preferably a sulfonamide working electrode, a counter electrode, for example made of alumina ceramic coated with gold or of an inert conductor such as Platinum or Carbon, and a reference electrode, for example a silver chloride electrode such as Ag/AgCl/KClsat - a silver wire coated with a layer of solid silver chloride, immersed in the saturated potassium chloride -, or a pseudo reference electrode, for example an Ag/AgCl- a silver wire coated with a layer of solid silver chloride. As used herein, the term "reference electrode" refers to an electrode which has a stable and well-known electrode potential. As used herein, the terms "counter electrode" and "auxiliary electrode" are equivalent and refer to an electrode used in a three electrodes electrochemical cell for voltammetric analysis or other reactions in which an electric current is expected to flow. By means of the auxiliary electrode, a requested voltage is applied to the working electrode. This configuration allows the potential of the working electrode to be measured against a known reference electrode without compromising the stability of that reference electrode by passing current over it.

In a preferred embodiment, the sulfonamide sensor according to the invention, preferably a sulfonamide electrochemical sensor, more preferably an amperometric electrochemical sensor, even more preferably a differential pulse voltammetry electrochemical sensor, comprise a sulfonamide electrode, preferably a sulfonamide working electrode, a reference electrode and a counter electrode, the sulfonamide working electrode being preferably an electrode made of alumina ceramic and gold coated.

In a most preferred embodiment, when the sulfonamide sensor comprises more than 3 electrodes, it comprises one counter electrode, one reference electrode and several working electrodes, preferably sulfonamide working electrodes.

Optionally, the sulfonamide sensor according to the invention, preferably a sulfonamide electrochemical sensor, more preferably an amperometric electrochemical sensor, even more preferably a differential pulse voltammetry electrochemical sensor, comprise an electrically conductive surface coated by a Non-molecularly Imprinted Polymer (NIP) layer or a NIP electrode. The NIP electrode of the sulfonamide sensor according to the invention, preferably a sulfonamide electrochemical sensor, more preferably an amperometric electrochemical sensor, even more preferably a differential pulse voltammetry electrochemical sensor, may be a NIP counter electrode, a NIP reference electrode or a supplementary NIP working electrode.

As used herein, the term "Non-molecularly Imprinted Polymer layer" or "NIP layer" refers to a layer of polymer produced exactly in the same conditions as the MIP layer but in the absence of the sulfonamide or in the presence of the sulfonamide but without removing the sulfonamide from the polymer at the end of the polymerization process, preferably a layer of polymer produced exactly in the same conditions as the MIP layer but in the absence of the sulfonamide. A NIP layer will have, for example, the same thickness and polymer composition as the corresponding MIP layer. As used herein, the term NIP electrode refers to an electrode which conductive surface is at least in part coated by a NIP layer, preferably all the conductive surface of the electrode is coated by a NIP layer.

The sulfonamide electrochemical sensor according to the invention, more preferably an amperometric electrochemical sensor, even more preferably a differential pulse voltammetry electrochemical sensor, may be an electrochemical sensor of the classical type with a cell in which the different electrodes are separated and singularly insertable/replaceable, the cell containing the electrolytic solution. Preferably, the sulfonamide electrochemical sensor, more preferably an amperometric electrochemical sensor, even more preferably a differential pulse voltammetry electrochemical sensor, is of an integrated and miniaturized form, preferably a chip on which the electrodes are imprinted by serigraphic processes, i.e. screen-printed electrodes, and/or by deposition/sputtering/etching of conductors and insulators, and/or by photolithography followed by pyrolysis, i.e. pyrolyzed photoresist carbon electrodes, and the like.

In a most preferred embodiment, the sulfonamide electrochemical sensor according to the invention, more preferably an amperometric electrochemical sensor, even more preferably a differential pulse voltammetry electrochemical sensor, is a Screen Printed Electrochemical sensor (SPE sensor).

As used herein, the term "Screen Printed Electrochemical Sensor", "SPE" and "Screen Printed Electrode" are equivalent and refer to a chemically inert substrate on which three electrodes, including a working electrode, a reference electrode and a counter electrode, are printed through screen printing methodology. The working electrode is the principal electrode on which electrochemical reactions are performed, while the reference electrode and counter electrode are used to complete the electronic circuit. The chemical event on the screen printed electrode, i.e. interaction of sulfonamide molecules with the imprints of the MIP layer, is converted into a detectable signal with the integration of a transducer element, i.e. the electrochemical transduction. The fabrication of an electrochemical screen printed sensor usually involves three steps: fabrication of the screen printed electrode itself, surface design of the screen printed electrode and subsequently utilization for a sensing application.

The inks used in screen printed electrode fabrication consist of particles, polymeric binder and other additives for improved dispersion, printing and adhesion process. The exact ink formulation and composition are patented by the respective companies and are not disclosed to the users. The variation in the ink composition such as types, size or loading of particles strongly influence the electron transfer process and change the overall performance of the designed screen printed sensor. The invention can be implemented by any type of SPE. Preferred SPE according to the invention are SPE produced by *BVT Technologies.*

The SPE according to the invention can be selected from preanodized screen printed carbon electrodes and metal oxide based screen printed electrodes. Preferably, the SPE according to the invention is a gold coated screen printed electrode.

In a most preferred embodiment, the sulfonamide sensor according to the invention is a sulfonamide SPE, said SPE being made of a non-conductive substrate, preferably alumina ceramic, the working electrode of said SPE having a gold electrically conductive surface coated by a MIP layer imprinted by a sulfonamide. The non-conductive substrate is as described in the third aspect of the invention above mentioned. Preferably, the counter electrode is also a gold coated electrode. Preferably, the reference electrode is a silver electrode coated with silver chloride. Preferably, the SPE is connected to a potentiostat (reader), which measures currents appearing between the sulfonamide working electrode and the counter electrode, or potentials between the sulfonamide working electrode and the reference electrode.

In a particular embodiment, the reference electrode or the counter electrode of the sulfonamide SPE, preferably the reference electrode of the sulfonamide SPE is coated by a NIP.

The sulfonamide sensor according to the invention may be very sensitive and specific of the sulfonamide or the combination of sulfonamide, preferably SMZ, used to imprint the MIP layer. The sulfonamide sensor according to the invention may have a limit of detection (LOD) inferior to about 50 nM, preferably to about 10 nM, more preferably to about 5 nM, even more preferably to about 2 nM. In a most preferred embodiment, the sulfonamide sensor according to the invention has a LOD of about 0,9 nM.

As used herein the terms "Limit of Detection", "LOD", "detection limit", "lower limit of detection" are equivalent and refer to the lowest quantity of a substance that can be distinguished from the absence of that substance (i.e. a blank value) with a stated confidence level (generally of 99%). The detection limit can be estimated from the mean of the blank, the standard deviation of the blank and some confidence factor. Another consideration that affects the detection limit is the accuracy of the model used to predict concentration from the raw analytical signal. The LOD can also be calculated according to the following formula: LOD= 3*S/b, where S is standard deviation of the regression residuals and b is the slope of the regression line.

The sulfonamide sensor according to the invention may have a limit of quantitation (LOQ) inferior to about 100 nM, preferably to about 50 nM, more preferably to about 10 nM, even more preferably to about 5 nM. In a most preferred embodiment, the sulfonamide sensor according to the invention has a LOQ of about 3 nM.

As used herein, the term "Limit of Quantitation" or "LOQ" may refers to the limit at which the difference between two distinct concentrations can be reasonably discerned. Preferably, the term "Limit of Quantitation" or "LOQ" refers to the lowest analyte concentration that can be quantitatively detected with a stated accuracy and precision. The LOQ can be calculated according to the following formula: LOQ = 10*S/b, where S is the standard deviation of the regression residuals and b is the slope of the regression line.

The sulfonamide sensor according to the invention may also be very selective, i.e. it may rebind selectively the target sulfonamide, preferably SMZ, with respects to interfering molecules with slightly different size and presence or absence of similar/identical functional groups as well as the way they are arranged. The interfering molecules for the sulfonamide, preferably SMZ, can be for example sulfanilamide, sulfadimethoxine, sulfathiazole, amoxicillin and doxycycline.

The sulfonamide sensor according to the invention may have a selectivity at least 6 times higher, preferably 8 times higher, even more preferably at least 10 times higher, for the target sulfonamide, preferably SMZ, than to any interfering molecule. In a particular embodiment, the selectivity of the sulfonamide sensor for the target sulfonamide, preferably SMZ, is 6 times higher, 8 times higher, 10 times higher, 12 times higher than to any interfering molecule.

In a fifth aspect, the invention relates to a method for preparing a MIP layer coated electrically conductive surface, wherein the MIP layer comprises a m-PD polymer and sulfonamide imprints, and wherein the method comprises the following steps:

1) polymerization of m-PD on said electrically conductive surface in the presence of a sulfonamide;
2) extraction of the sulfonamide from the polymeric layer thereby obtaining a sulfonamide imprinted MIP layer coating the electrically conductive surface.

In a sixth aspect, the invention relates to a method for preparing a sulfonamide electrode, wherein the method comprises the following steps:

1) polymerization of m-PD on the electrically conductive surface of the electrode in the presence of a sulfonamide;
2) extraction of the sulfonamide from the polymeric layer thereby obtaining a sulfonamide electrode.

In a seven aspect, the invention further relates to a method for preparing a sulfonamide Sensor, wherein the method comprises the following steps:

1) polymerization of m-PD in the presence of a sulfonamide on an electrically conductive surface of the sensor, preferably on an electrode of the sensor, more preferably on a working electrode of the sensor;
2) extraction of the sulfonamide from the polymeric layer thereby obtaining a sulfonamide imprinted MIP layer coating an electrically conductive surface of the sensor, preferably an electrode of the sensor, more preferably a working electrode of the sensor.

In an eighth aspect, the invention further relates to a method for preparing a sulfonamide SPE, wherein the method comprises the following steps:

1) polymerization of m-PD in the presence of a sulfonamide on an electrically conductive surface of the SPE, preferably on an electrode of the SPE, more preferably on a working electrode of the SPE;
2) extraction of the sulfonamide from the polymeric layer thereby obtaining a sulfonamide imprinted MIP layer coating an electrically conductive surface of the SPE, preferably an electrode of the SPE, more preferably a working electrode of the SPE.

The sulfonamide, the MIP layer and the m-PD are as described in the first aspect above mentioned. The electrically conductive surface and the MIP layer coated electrically conductive surface are as described in the second aspect above mentioned. The electrode, the working electrode and the sulfonamide electrode are as described in the third aspect above mentioned. The sulfonamide sensor, the SPE and the sulfonamide SPE are as described in the fourth aspect above mentioned.

In the first step of the method for preparing a MIP layer coated electrically conductive surface, method for preparing a sulfonamide electrode, method for preparing a sulfonamide sensor, or method for preparing a sulfonamide SPE, m-PD is polymerized in the presence of sulfonamide on, respectively, the electrically conductive surface, the electrically conductive surface of the electrode, an electrically conductive surface of the sensor, or an electrically conductive surface of the SPE.

m-PD can be polymerized by any method well known from the man skilled in the art. As used herein the term "polymerization" refers to a process of reacting monomer molecules together in a chemical reaction to form polymer chains or three-dimensional networks. Preferably, the polymerization of m-PD is an electropolymerization.

As used herein, the terms "electropolymerization" and "electrodeposition" are equivalent and refer to a polymerization method in which a polymer layer with a certain thickness is obtained by controlling the number of cycles or the current that is applied to the electrode. In an electrochemical polymerization, the monomer polymerization is usually activated, i.e. radicals of the monomers are generated, by the potential applied to the electrode. The main advantages of the electropolymerization are the formation of a polymer film directly on the electrode surface and the possibility of the polymer thickness to be controlled by adjusting the electrical charge passed through the electrode.

The electropolymerization according to the invention can be selected from the list consisting in potentiostatic, galvanostatic, potential cycling, and potential pulse methods, preferably the electropolymerization is performed under a potentiostatic conditions.

The electropolymerization according to the invention can be performed by cathodic reduction or anodic oxidation, preferably the electropolymerization is an anodic oxidation.

In a preferred embodiment, the electropolymerization is performed in the presence of between about 0.5 mM and about 50 mM of m-PD, preferably between about 1 mM and about 10 mM of m-PD, more preferably between about 2,5 mM and about 7,5 mM of m-PD, even more preferably the electropolymerization is performed in the presence of about 5 mM of m-PD.

In another preferred embodiment, the electropolymerization is performed in the presence of between about 0,1 mM and about 50 mM of sulfonamide, preferably between about 0,5 mM and about 10 mM of sulfonamide, more preferably between about 1 mM and about 5 mM of sulfonamide, even more preferably the electropolymerization is performed in the presence of about 3,5 mM of sulfonamide.

In still another preferred embodiment, the electropolymerization is performed by an electrochemical workstation (potentiostat) in an electrochemical cell at a constant potential versus a reference electrode. Preferably, the constant potential applied is of a value comprised between about 0,45 and about 0,75 V, preferably between about 0,55 and about 0,7 V, more preferably between about 0,60 V and about 0,65 V, even more preferably the constant potential applied is of about 0,63 V. Preferably, the reference electrode is an Ag/AgCl reference electrode.

In still another preferred embodiment, the electropolymerization is performed until an electric charge of between about 2 $mC/cm^2$ and about 10 $mC/cm^2$, preferably between about 3 $mC/cm^2$ and about 7 $mC/cm^2$, more preferably between about 4 $mC/cm^2$ and about 6 $mC/cm^2$, even more preferably until an electric charge of about 5 $mC/cm^2$ has been passed through the electrically conductive surface.

The m-PD can be polymerized on the electrically conductive surface by immersing the electrically conductive surface in a PBS solution at a concentration comprised between about 0,001 M and about 0,1 M, preferably a concentration of about 0,01 M, having a pH comprised between about 7 and about 7,8, preferably of about 7,4, comprising between about 2,5 mM and about 7,5 mM of m-PD, preferably about 5 mM of m-PD, and comprising between about 1 mM and about 5 mM of sulfonamide, preferably about 3,5 mM of sulfonamide, by an electrochemical workstation in an electrochemical cell at a constant potential comprised between about 0,6 V and about 0,65 V, preferably of about 0,63 V, versus a reference electrode, preferably an Ag/AgCl reference electrode, until an electric charge of between about 4 $mC/cm^2$ and about 6 $mC/cm^2$, preferably about 5 $mC/cm^2$, has been passed through the electrically conductive surface.

In the second step of the method for preparing a MIP layer coated electrically conductive surface, method for preparing a sulfonamide electrode, method for preparing a sulfonamide sensor, or method for preparing a sulfonamide SPE, the sulfonamide molecules are extracted from the polymeric layer where they were entrapped, thereby obtaining a sulfonamide imprinted MIP layer.

The extraction of entrapped sulfonamides from the polymeric layer can be obtained by immersion of the polymeric layer in an extracting solution, preferably under continuous stirring. As used herein, the term "extracting solution" refers to a solution capable to disrupt the non-covalent interactions between the sulfonamide and poly-m-DP within its imprint. The extracting solution can be any organic solvent or mixture of organic solvents in which the sulfonamide is readily soluble but having no or insignificant effect on the polymer. In a preferred embodiment, the extracting solution comprises acetic acid and/or methanol, preferably the extracting solution comprises acetic acid and methanol. The proportion of methanol in the extracting solution can be greater than the proportion of acetic acid. For example, the ratio of acetic acid over methanol can be comprised between about 1.5:2 and about 1:10, preferably between about 1:2 and about 1:5, more preferably between about 1:2 and 1:4, even more preferably the ratio of acetic acid over methanol is of about 1:3.

The polymeric layer may be immersed in the extracting solution for at least about 1 hour, preferably at least about 5 hours, more preferably at least about 10 hours, even more preferably at least about 15 hours. In particular, the polymeric layer may be immersed in the extracting solution for between about 5 hours and about 30 hours, preferably between about 10 hours and about 24 hours, more preferably between about 16 hours and about 20 hours. For example, the polymeric layer may be immersed in the extracting solution for about 18 hours.

The extraction of entrapped sulfonamides may take place under continuous stirring, preferably a gentle stirring. Alternatively, the extraction may partially take place under stirring. The purpose of the stirring is to facilitate the diffusion of the solvent into the polymer matrix. This stirring can be carried out at a speed comprised between about 100 rpm and about 1000 rpm, preferably between about 250 rpm and about 900 rpm, more preferably between about 400 rpm and about 800 rpm, even more preferably between about 500 rpm and about 700 rpm. In a most preferred embodiment, the stirring is carried out at a speed of about 600 rpm. The stirring can be carried out with a vortex or any similar device well known from the man skilled in the art.

This extraction step may substantially remove the sulfonamide molecules, preferably SMZ molecules, from the polymeric layer, thereby forming imprints and obtaining a MIP layer. By substantially removing the sulfonamide molecules, it is intended that at least 50%, preferably at least 60 %, more preferably at least 70%, still preferably at least 80%, yet preferably at least 90%, even more preferably at least 95% of the sulfonamide molecules are removed from the polymeric layer. In a particular embodiment, at least 99% of the sulfonamide molecules are removed from the polymeric layer.

In an additional step, the method for preparing a MIP layer coated electrically conductive surface, method for preparing a sulfonamide electrode, method for preparing a sulfonamide sensor, or method for preparing a sulfonamide SPE, may comprise prior to the first step of the methods above described, a step of cleaning the electrically conductive surface. Preferably, the electrically conductive surface is electrochemically cleaned. This step insures the electrochemical cleanness and stability of the electrically conductive surface prior to the polymerization. It may also improve the reproducibility of the electropolymerization. To clean the electrically conductive surface, the electrically conductive surface can be immersed in a solution of $H_2SO_4$, preferably at a concentration of between about 0,01 M and about 1 M, preferably about 0,1 M, and the potential is cycled between about 0,005 V and about 2 V, preferably between about 0,1 V and about 1,15 V, versus a reference electrode, preferably an Ag/AgCl reference electrode, at a scan rate of between about 70 and about 130 mV/s, preferably at a scan rate of about 100 mV/s, until the voltammograms are reproducible, i.e. the current peaks are getting to about the same height and position during at least 3 cycles, preferably at least 5 cycles, which indicates that the electrically conductive surface, preferably gold surface, is stable and free of contaminants, and/or for between about 10 cycles and about 20 cycles, preferably for about 15 cycles.

In another additional step, the method for preparing a MIP layer coated electrically conductive surface, method for preparing a sulfonamide electrode, method for preparing a sulfonamide sensor, or method for preparing a sulfonamide SPE, may comprise after the extraction step, a step of washing the MIP layer coated electrically conductive surface. Preferably, the MIP layer coated electrically conductive surface is washed with water, more preferably with ultrapure water.

The washing step may be obtained by immersing the polymeric layer coated electrically conductive surface in water, preferably ultrapure water, for about 1 min to about 30 min, preferably for about 10 min, under agitation, preferably at a speed comprised between about 300 rpm and about 900 rpm, more preferably at a speed of about 600 rpm. For such an agitation, a vortex can be used, or any other similar device well known from the man skilled in the art.

This washing step may improve the removal of sulfonamides from the MIP layer. After the washing step, the sulfonamides may be substantially removed from the MIP layer.

In yet another additional step, the method for preparing a MIP layer coated electrically conductive surface, method for preparing a sulfonamide electrode, method for preparing a sulfonamide sensor, or method for preparing a sulfonamide SPE, may further comprise, after the step of washing or directly after the extraction step, a step of drying the MIP layer coated electrically conductive surface. Preferably, the sulfonamide layer coated electrically conductive surface is dried by nitrogen flow or oil free compressed air, preferably by nitrogen flow.

In a ninth aspect, the invention relates to a MIP layer coated electrically conductive surface directly obtained by the above described method for preparing a MIP layer coated electrically conductive surface.

In a tenth aspect, the invention also relates to a sulfonamide electrode directly obtained by the above described method for preparing a sulfonamide electrode.

In an eleventh aspect, the invention further relates to a sulfonamide sensor directly obtained by the above described method for preparing a sulfonamide sensor.

In a twelfth aspect, the invention still relates to a sulfonamide SPE, preferably a SMZ SPE, directly obtained by the above described method for preparing a sulfonamide SPE.

In a thirtieth aspect, the invention also relates to a method, preferably an *in-vitro* method, of detection of a sulfonamide in a liquid medium or of measuring the concentration of a sulfonamide in a liquid medium, the method comprising contacting a sulfonamide sensor according to the invention with said liquid medium. Preferably the sulfonamide is SMZ. Preferably, the sulfonamide sensor is a sulfonamide SPE.

In a preferred embodiment, the invention relates to a method, preferably an *in-vitro* method, of detection of SMZ or of measuring the concentration of SMZ in a liquid medium, said method comprising contacting a SMZ SPE with said liquid medium.

The sulfonamide and the SMZ are as described in the first aspect of the invention above mentioned. The sulfonamide sensor is as described in the fourth aspect of the invention above mentioned or in the eleventh aspect of the invention above mentioned. The sulfonamide SPE and the SMZ SPE are as described in the fourth aspect of the invention above mentioned or in the twelfth aspect of the invention above mentioned.

The liquid medium according to the invention can be any liquid. Preferably, the liquid medium according to the invention is selected from the list consisting in water sample, milk sample, beverage sample, liquid sample from a patient, cell culture medium, slurry sample, liquid dung, snow sample, and ice sample.

When the liquid medium is a cell culture medium, it is preferably the supernatant of a cell culture medium.

When the liquid medium is a milk sample, it is preferably a milk sample selected from the list consisting in cow milk sample, goat milk sample, sheep milk sample, and mixtures thereof.

When the liquid medium is a sample from a patient, it is preferably a body fluid sample. The body fluid according to the invention may be selected from the list consisting in blood sample, plasma sample, serum sample, lymph sample, urine sample, saliva sample, and cerebrospinal fluid sample. More preferably, the body fluid according to the invention is selected from the list consisting in blood sample, plasma sample, and serum sample. Even more preferably, the sample from a patient is

a serum sample.

The patient according to the invention can be any animal. In particular, the patient according to the invention can be a bird, preferably selected from the list consisting in parrot, fowl, poultry such as turkeys, chickens, ducks, geese, guinea fowl. Preferably, the patient according to the invention is a mammal, more preferably selected from the list consisting in cattle, goat, sheep, horse, pig, cat, dog, rabbit, mouse, rat, guinea-pig, zebu, donkey, buffalo, camel, lama yak, alpaca, ferret, reindeer, deer, moose, elephant, squirrel, elk, mink, hamster, chinchilla, bison, gerbil, monkey, primate and human. In a most preferred embodiment, the patient is human. The human patient according to the invention can be an infant, a child or an adult.

As used herein, the term beverage refers to any liquid that is adapted to human or animal consumption, including alcoholic and nonalcoholic drinks as well as liquid food.

In a preferred embodiment, the liquid medium according to the invention is a water sample. The water sample according to the invention can be selected from the list consisting in water body sample, groundwater sample, mineral water sample, drinkable water sample, tap-water sample, waste water sample such as hospital wastewater sample, treatment plant waste water sample, sewage water sample, or culture water sample, pipe water sample, tank water sample, surface runoff, rainwater, and stormwater.

The water sample according to the invention is preferably a water body sample. As used herein, the terms "body of water", "waterbody", and "water body" are equivalent and refer to any accumulation of water, generally on a planet's surface. The water body sample according to the invention may be selected from the list consisting in sea, ocean, lagoon, bay, gulf, strait, delta, estuary, fjord, river, creek, stream, brook, rill, waterfall, source, spring, drainage basin, lake, pool, pound, puddle, channel, canal, water reservoir, storage pond, impoundment, harbor, glacier, seep, flush, and wetlands such as bog, swamp, marsh, or fen. In a most preferred embodiment, the water body according to the invention is selected from the list consisting in river, stream, creek, lake, sea and ocean.

The water sample according to the invention may also be a groundwater sample. As used herein, the term "groundwater" refers to any water present beneath Earth's surface, for example in soil pore spaces and in the fractures of rock formations. The groundwater according to the invention may be selected from the list consisting in aquifer, especially the phreatic zone of the aquifer, soil moisture, permafrost, immobile water in very low permeability bedrocks, deep geothermal water and oil formation water.

The water sample according to the invention may also be a wastewater sample. As used herein, the term "wastewater" or "waste water" refers to any water that has been affected by human use. The term waste water therefore encompasses, for example, water from domestic, industrial, commercial, agricultural activities, or combinations thereof. The waste water according to the invention may be selected from the list consisting in hospital wastewater sample, industrial waste water sample, treatment plant waste water sample, domestic wastewater from households, sewage water sample such as any sewer inflow or sewer infiltration, culture water sample such as aquaculture water sample and in particular pisciculture water sample or horticulture water sample, reused water sample, and recycled water sample.

The detection and/or measurement of the concentration of sulfonamide, preferably SMZ, with a sulfonamide sensor, preferably a sulfonamide SPE, more preferably a SMZ SPE, in a liquid medium, preferably a water sample, comprises a premeasurement phase and a measurement phase.

The premeasurement phase includes the initial sensor reading or "I0" which is a measurement in the absence of any sulfonamide (a blank). The premeasurement phase also includes the calibration of the sulfonamide sensor with standard sulfonamide concentrations.

The measurement phase includes sequentially:

- the incubation of the sulfonamide sensor with the liquid medium, preferably water, to be tested. This incubation phase is between about 5 min to about 1 hour long, preferably between about 10 min to about 50 min long, more preferably between about 20 min to about 40 min long, even more preferably about 30 min long. This incubation phase may be performed at a temperature ranging from about 10°C to about 50°C, preferably from about 15°C to about 35°C, more preferably from about 20°C to about 25°C, even more preferably at a temperature of about 25°C. This step allows to charge the sulfonamide-MIP layer of the sensor in sulfonamides, proportionally to the sulfonamide concentration in the liquid medium.
- the washing of the sensor, preferably twice. The sensor can be washed in a PBS solution. The washing can be under agitation, preferably at a speed ranging from about 400 rpm to 800 rpm, preferably at a speed of about 600 rpm, for about 2 min to about 10 min, preferably for about 5 min. The agitation can be induced by a vortex, or any similar device well known from the man skilled in the art. This step allows to remove the non-sulfonamide molecules of the sample that are weakly bound to the sulfonamide-MIP layer as well as the sulfonamide molecules that are not bound to the imprints.
- the measurement of the sulfonamide concentration is performed by DPV after immersing the NF sensor into a KCl solution, preferably at 1 M, comprising a redox probe, preferably $K_3[Fe(CN)_6]/K_4[Fe(CN)_6]$, preferably at a 4 mM concentration. For example, DPV curves can be recorded in the range of potentials from 0 V to 0,4 V vs Ag/AgCl, with a pulse amplitude of 0,025 V, a pulse width of 0,1 s, a step potential of 0,005 V and sample period 0,5 s.

Before the incubation of the sensor in the liquid sample to be tested, the liquid sample can be diluted. However, this is generally not necessary. Indeed, the LOD of the SMZ SPE sensor according to the invention is of 0,9 nM but is still suitable to be used at concentrations such as 1 mM, which is far over the range of SMZ concentrations that are expected to be find in water samples.

In a particular embodiment, the detection and/or measurement of the concentration of sulfonamide above mentioned further comprises a regeneration phase of the sulfonamide sensor. The regeneration phase of the sensor comprises the immersion, preferably twice, in a PBS solution under agitation. The PBS solution for the regeneration phase might comprise other chemicals such as Tween, SDS, NaCl, HCl, acetic acid, methanol, derivatives or mixtures thereof. Preferably, the agitation is done at a speed ranging from about 400 rpm to 2000 rpm, preferably at a speed of about 600 rpm. In a preferred embodiment, the regeneration of the MIP sensor comprises the immersion of the MIP layer in an acetic acid-methanol (1:3) mixture for about 16 to about 20 hours under continuous stirring, preferably at 600 rpm. This phase allows to unbind the sulfonamide molecules present in the imprints and to reuse the sulfonamide sensor. Preferably, the washed sulfonamide sensor is dried prior reusing. In a preferred embodiment, the sulfonamide sensor is regenerated between 1 and about 10 times, preferably between 1 and 5 times, more preferably between 1 and 3 times. In a most preferred embodiment, the sulfonamide sensor is regenerated only 1 time

Preferably, a new NF sensor is used for each measurement.

Still preferably, the detection and/or measurement of the concentration of sulfonamide above mentioned further comprise a data processing phase. The raw data obtained from the measurement phase, i.e. DPV current peak, can be normalized to the I0 measured in the premeasurement phase. It can be calculated according to the following formula:

$$I_n = (I_0 - I_c)/I_0$$

where, $I_0$ is the DPV current peak measured after the incubation of the SPE in a blank solution, and $I_c$ is the DPV current peak measured after incubation of the SPE in the liquid medium to be tested (i.e. a solution containing a particular concentration of sulfonamide).

In a particular embodiment, the sulfonamide SPE is used with a NIP SPE for comparison purpose. A NIP SPE is a SPE prepared with the same method as the method for preparing a sulfonamide SPE except that either the polymer layer coating the electrically conductive surface of the working electrode is not imprinted by a sulfonamide or that the sulfonamide molecules are not removed from the polymeric layer, preferably the polymer layer coating the electrically conductive surface of the working electrode is not imprinted by a sulfonamide.

In a fourteenth aspect, the invention also relates to a method for assessing the pollution of a liquid medium by a sulfonamide, said method comprising the following steps:

- measuring the concentration of a sulfonamide in said liquid medium according to the method of measuring the concentration of a sulfonamide in a liquid medium described in the above-mentioned thirtieth aspect of the invention;
- if the concentration of the sulfonamide in said liquid medium is above the PNEC for that sulfonamide, the liquid medium is then considered as polluted.

In a preferred embodiment, the invention relates to a method for assessing the pollution of a liquid medium by SMZ, said method comprising the following steps:

- measuring the concentration of SMZ in said liquid medium according to the method of measuring the concentration of SMZ in a liquid medium described in the above-mentioned thirtieth aspect of the invention;
- if the concentration of SMZ in said sample is above the PNEC for SMZ then the liquid medium is considered as polluted.

As used herein, the term "Predicted No Effect Concentration" or "PNEC" relates to the concentration of a chemical which marks the limit at which below no adverse effects of exposure in an ecosystem are measured.

In a particular embodiment, the invention relates to a method for assessing the pollution of a liquid medium by SMZ, said method comprising the following steps:

- measuring the concentration of SMZ in said liquid medium according to the method of measuring the concentration of SMZ in a liquid medium described in the above-mentioned thirtieth aspect of the invention;
- if the concentration of SMZ in said sample is above a concentration of about 20 nM, preferably 10 nM, more preferably 5 nM, still preferably 3,5 nM, yet preferably 2 nM, even more preferably 1 nM, then the liquid medium is considered as polluted.

The sulfonamide and the SMZ are as described in the first aspect of the invention above mentioned. The liquid medium is as described in the thirteenth aspect of the invention above mentioned. Preferably, the liquid medium is selected from the list consisting in water sample, milk sample, and beverage sample. More preferably, the liquid medium is a water sample. The water sample can be selected from the list consisting in water body sample, groundwater sample, mineral water sample, drinkable water sample, tap-water sample, waste water sample such as hospital wastewater sample, treatment plant waste water sample, sewage water sample, or culture water sample, pipe water sample, tank water sample, surface runoff, rainwater, and stormwater. Even more preferably, the water sample is a water body sample. The water body sample can be selected from the list consisting in sea, ocean, lagoon, bay, gulf, strait, delta, estuary, fjord, river, creek, stream, brook, rill, waterfall, source, spring, drainage basin, lake, pool, pound, puddle, channel, canal, water reservoir, storage pond, impoundment, harbor, glacier, seep, flush, and wetlands such as bog, swamp, marsh, or fen. In a most preferred embodiment, the water body sample is selected from the list consisting in river, stream, creek, lake, sea and ocean.

In a fifteenth aspect, the invention also relates to the use of a sulfonamide sensor for detecting and/or measuring the concentration of a sulfonamide in a liquid medium. Preferably the sulfonamide is SMZ. Preferably, the sulfonamide sensor is a sulfonamide SPE.

In a preferred embodiment, the invention relates to the use of a SMZ SPE for detecting SMZ or for measuring the concentration of SMZ in a liquid medium.

The sulfonamide and the SMZ are as described in the first aspect of the invention above mentioned. The sulfonamide sensor, the sulfonamide SPE and the SMZ SPE are as described in the fourth aspect of the invention above mentioned. The liquid medium is as described in the thirteenth aspect of the invention above mentioned.

Further aspects and advantages of this invention are disclosed in the following experimental section, which should be regarded as illustrative and not limiting the scope of this application.

## *Examples*

The aim of these experiments was to develop a sensitive and specific MIP-SPE sensor for the detection of SMZ in a label-free fashion via differential pulse voltammetry.

The performances of MIP sensors are strictly dependent on the capability of interaction between the imprinted polymer and the target analyte (i.e. SMZ here): such interaction varies in unpredictable manner depending on the chemical and physical characteristics of the respective molecules. The efficacy of such interaction determines the quality of the obtained mold, the ease in loading and unloading the analyte and, accordingly, the sensitivity, stability and reproducibility over time of the method of analysis. For example, an imprecise imprinting entails a reduced capability of binding to the target analyte and/or an increased interference caused by the binding of MIP with molecules different from the target. Therefore, the MIP sensors are always tailor made, i.e. for the detection of a small and chemical-sterically homogeneous group of analytes and they require their own conditions of production process and measurement parameters, not a priori predictable or deducible from MIP sensors created for different analytes or based on different imprinted polymers. Critical parameters include, for example, the thickness of the produced polymer matrix, the conditions for removal of the templating agent after polymerization, the amount of imprinted templating agent, in particular the amount/accessibility of the binding sites obtained in the polymer matrix, the usage modes of the probe during measurement, the conditions of incubation with the target analyte (time, pH, etc.).

## *Materials and Methods*

### *Chemicals and Material*

All chemicals, except acetic acid, which was provided by Lach-Ner, were obtained from Sigma-Aldrich. The chemicals were used as received without further purification. All aqueous solutions were prepared in ultrapure water (resistivity 18,2 MΩ·cm, Millipore, USA). Phosphate buffered saline (PBS) solution (0.01 M, pH 7,4) was used to prepare the synthesis and analyte solutions. The screen-printed electrodes (SPE) with a circular gold working electrode of 1 mm in diameter, a silver covered by AgCl as reference and a gold counter electrode were purchased from BVT technologies, AS (Praha, Czech Republic) (catalog #AC1.W1.R2).

### *SMZ-MIP Preparation*

Electrochemical technique was used to generate the polymer poly(m-phenylenediamine), PmPD film, directly on the SPEs. All stages of the preparation procedure are depicted in Figure 1.

Firstly, prior to film synthesis, the working electrodes of the SPE were activated through electrochemical cleaning in 0,1 M sulfuric acid solution by cycling the potential between 0,1 and 1,15 V at a scan rate of 100 mV/s for 15 cycles.

For the electropolymerization of m-PD in the presence of SMZ, the SPE was connected to an electrochemical workstation (Reference 600, Gamry Instruments, USA) in a setup where the three electrodes were covered with a solution mixture containing the monomer, 5 mM mPD and template, 3,5 mM SMZ. Constant potential of 0,63 V (versus Ag/AgCl) was applied to the WE of SPE thus forming the PmPD/SMZ film. The thickness of the forming PmPD/SMZ film was controlled by amount of the electrical charge passed through the WE. After electropolymerization, SMZ molecules were removed through solvent extraction by immersing the acetic acid-methanol (1:3) mixture for 16-20 h to form the SMZ-MIP (c.f. Fig. 1B) that reveals binding sites for subsequent rebinding of SMZ molecules (c.f. Fig. 1C).

The SMZ-MIP thicknesses were determined by spectroscopic ellipsometry (SE 850, Sentech Instruments GmbH, Berlin, Germany), measuring ellipsometric Psi and Delta spectra between 350 and 850 nm at 70° incidence angle in ambient air on three spots of each film (cf. Fig. 3A).

*Rebinding and selectivity study*

For measurements of binding and selectivity of SMZ-MIP-SPE towards SMZ, differential pulse voltammetry (DPV) electrochemical measurements were performed in 1 M KCl solution containing 4 mM of a redox probe ($K_3[Fe(CN)_6]/K_4[Fe(CN)_6]$) at room temperature.

The SMZ-MIP-SPE sensor were equilibrated with PBS buffer (pH 7,4) for 30 min by exposing the electrodes of the sensor to the buffer solution so as to establish a stable baseline for subsequent analyte recognition measurements. The analyte solutions containing different concentrations of SMZ: 2,6, 12,8, 64, 320 and 1600 nM were prepared in PBS buffer solution (pH 7.4). Following baseline stabilization, the electrode modified by the films were subsequently incubated in the analyte solutions for 10 min and then further incubated in PBS for 5 min to remove loosely bound molecules before electrochemical measurements.

After connecting to an electrochemical workstation (Reference 600, Gamry Instruments, USA) through a connector purchased from Palmsens BV (PS-CONN, the Netherlands), DPV measurements were recorded in the potential window between 0 V and 0,4 V with a pulse amplitude of 0,025 V, a pulse width of 0,1 s, a step potential of 0,005 V and sample period 0,5s.

The response signals of the SMZ-MIP-SPE were the normalized DPV current peaks, $I_n$, calculated according to Eq(1):

$$I_n = (I_0 - I_c)/I_0 \qquad (1)$$

where $I_0$ is the DPV current peak measured after incubation of the SMZ-MIP-SPE in a blank PBS solution (μA), $I_c$ is the DPV current peak measured after incubation of the SMZ-MIP-SPE in a PBS solution containing a particular concentration (C) of SMZ (μA).

The selectivity of SMZ-MIP-SPE towards SMZ was determined by comparing the responses of the SMZ-MIP-SPE sensor towards SMZ with the responses obtained from interfering molecules at the same concentration (0,32 μM). Interfering molecules including sulfadimethoxine, sulfanilamide, sulfathiazole, amoxicillin and doxycycline were selected based on their close similarities with SMZ and the possibility of being found in the same environment where SMZ exists.

***Results***

The SMZ-MIP-SPE sensor was fabricated after careful selection of monomer with complementary functional groups giving the best interaction with SMZ. This was archived by a combination of computational theoretical calculation and NMR spectroscopy. Of the randomly selected electropolymerizable monomers including polypyrrole (PPy), poly(3,4-ethylenedioxythiophene) (PEDOT) and m-phenylenediamine (mPD), theoretical calculations indicated that mPD have the strongest interaction potential with SMZ judging from their binding energies, hydrogen bond length and mulliken charges. Experimental studies by $^1H$ NMR also indicated that mPD and SMZ have strong hydrogen bond interactions. Thus, mPD was selected as the functional monomer for the preparation of SMZ-MIP.

The stability of the template at the electrochemical potential selected for mPD polymerization (0.63 V vs Ref) was accessed by cyclic voltammetry (cf. Fig. 2A) in PBS (pH 7.4). Obviously, SMZ voltammogram shows no oxidation or reduction current peak within the scanned potential range from 0 to 0,8 V vs Ag/AgCl thus establishing the preservation of its structural integrity during electropolymerization.

To monitor each step of the SMZ-MIP synthesis, electrochemical impedance spectroscopy (EIS) and differential pulse voltammetry (DPV) were employed (cf. Fig.2B). As shown in Fig. 2B, after PmPD/SMZ film formation on the bare Au surface, the charge transfer resistance, represented by the diameter of the semicircle greatly increased. However, after washing out procedure, a significant decrease in the charge transfer resistance is observed. This effect is also confirmed by DPV (cf. inset to Fig.2B) where the washing out procedure leads to a current increase in the SMZ-MIP film. This result suggests the removal of SMZ from PmPD/SMZ film which facilitates electron transfer across the modified working electrode of SPE.

Thickness of a thin MIP film plays a critical role in the accurate interpretation of its rebinding performance. Therefore, to ensure reproducible synthesis of films with exact thickness, the charge density applied during the electropolymerization of mPD was correlated to the SMZ-MIP thicknesses by ex-situ ellipsometry measurements (cf. Fig. 3A). Calibration graph indicates a linear relationship between the applied charge density and SMZ-MIP thickness. The optimal thickness of SMZ-MIP was determined by incubating SMZ-MIP and its reference NIP in 320 nM SMZ solution followed by the measurement of their responses. As shown (cf. Fig. 3B), the relative adsorption signal between the SMZ-MIP and NIP as depicted by imprinting factor (IF), is highest for 12,5 nm film thickness. This is quite surprising as it was expected that a thinner film will aid diffusion of analyte to the preformed binding sites and improve charge transfer. However, the result proved that although a thin film is necessary for aiding charge transfer, a sufficient surface

area (hence, thickness) of the recognition layer is also essential.

To analyse the SMZ-MIP-SPE sensor performance, the sensor was incubated in increasing analyte concentrations to obtain the concentration-dependent responses (cf. Fig. 4A) and $I_n$ values were calculated for each concentration (Eq. 1) and were used to plot adsorption isotherm (cf. Fig. 4B). To determine the binding affinity and maximum adsorption capacity of the sensor, the values of the dissociation constant ($K_D$) and the maximum binding response at saturation ($I_{max}$) were derived from fitting the binding isotherm to Langmuir-Freundlich isotherm (LF) (Eq. 2):

$$I_n = I_{max}*C^m/(K_D+C^m) \qquad (2)$$

where $I_n$ and $I_{max}$ are the sensor responses (Eq. 1) upon SMZ rebinding and saturation response, respectively, m is the heterogeneity index and C is SMZ concentration in solution.

The fitting result indicates that SMZ-MIP binds SMZ with a dissociation constant ($K_D$) of 0,96 ± 0,04 nM and show more than 6 times higher maximum adsorption capacity ($I_{max}$) than the reference NIP (0,63 vs 0,10).

The SMZ-MIP-SPE sensor shows a pseudo-linear response ($R^2$= 0.99181) to SMZ in the concentration range from ca. 1,0 to 8,2 nM (cf. Fig. 5A) The limit of detection (LOD) and limit of quantification (LOQ) were calculated as 3 and 10 times the standard deviation (SD) divided by the slope of the regression line (Miller J.N. et al, Statistics and chemometrics for analytical chemistry, 6th ed2010, Harlow: Pearson Education Limited. 278 p.), and were equal 0,9 nM and 3 nM, respectively. With an environmental concentration of SMZ in the range of 0,5 to 7 nM (cf. Boreen, A. L. et al, Environ. Sci. Technol. 2004, https://pubs.acs.org/doi/10.1021/es0353053; Kolpin, D. et al, Environ. Sci. Technol. 2002, https://pubs.acs.org/doi/10.1021/es011055j), LOD of 0,9 shows a great relevance of the SMZ-MIP sensor for SMZ detection.

The selectivity of the SMZ-MIP-SPE was characterized in terms of its capability to rebind selectively the target molecule, SMZ with respect to interfering compounds having structural similarities to the target SMZ molecule (SA, SD, ST) and non-structurally related molecules (AMO, DOXY). The SMZ-MIP-SPE demonstrated about 12 times higher response for SMZ at concentration of 0,32 μM than for the closest analogue of the target, sulfadimethoxine (SD) (cf. Fig.5B).

Therefore, the present invention shows high capacity for detecting a sulfonamide (SMZ) in liquid media with high recognition due to the influence of the preformed binding sites, analytically relevant sensitivity and selectivity to the target. Thus, with the embodiment disclosed in the current invention, a low cost, sensitive and selective method for SMZ determination is achievable and could be easily extended to the detection of other small molecules, especially of the sulfonamide group.

## Claims

1. A Molecularly Imprinted Polymer (MIP) layer coated electrically conductive surface, wherein said MIP layer comprises a m-phenylenediamine (m-PD) polymer and sulfonamide imprints.

2. A method for preparing a MIP layer coated electrically conductive surface, wherein the MIP layer comprises a m-PD polymer and sulfonamide imprints and wherein the method comprises the following steps:

   1) polymerization of m-PD on said electrically conductive surface in the presence of a sulfonamide;
   2) extraction of the sulfonamide from the MIP layer thereby obtaining a sulfonamide imprinted MIP layer coating the electrically conductive surface.

3. The MIP layer coated electrically conductive surface according to claim 1, or the method for preparing a MIP layer coated electrically conductive surface according to claim 2, wherein the thickness of the MIP layer is comprised between about 10 and about 15 nm, preferably the thickness of the MIP layer is of about 12,5 nm.

4. The MIP layer coated electrically conductive surface according to claim 1 or 3, or the method for preparing a MIP layer coated electrically conductive surface according to claim 2 or 3, wherein the electrically conductive surface is made of carbon in any of his conductive forms or of a metal, preferably a metal selected from the list consisting in ruthenium, rhodium, palladium, silver, osmium, iridium, platinum, gold, or a mixture thereof, more preferably the electrically conductive surface is made of gold.

5. The method for preparing a MIP coated electrically conductive surface according to anyone of claims 2 to 4, wherein the m-PD polymerization of step 1 is an electropolymerization, preferably comprising the steps of immersing the electrically conductive surface in a solution comprising about 5 mM of m-PD and about 3,5 mM of the sulfonamide and then applying to said electrically conductive surface a constant potential of about 0,63 V until an electric charge of 5 $mC/cm^2$ has been passed through the electrically conductive surface.

6. The method for preparing a MIP layer coated electrically conductive surface according to anyone of claims 2 to 5, wherein the extraction of the sulfonamide of step 2 comprises the immersion of the MIP layer in an acetic acid-methanol (1:3) mixture for about 16 to about 20 hours under continuous stirring.

7. A MIP layer coated electrically conductive surface directly obtained by the method according to anyone of claims 2 to 6.

8. A Sulfonamide sensor comprising at least one MIP layer coated electrically conductive surface according to anyone of claims 1, 3, 4 or 7.

9. The sulfonamide sensor according to claim 8, wherein the sulfonamide sensor is a Screen Printed Electrochemical sensor (SPE) and the at least one MIP layer coated electrically conductive surface is an electrically conductive surface of the working electrode of said SPE.

10. The use of a sulfonamide sensor according to claim 8 or 9 for detecting and/or measuring the concentration of a sulfonamide in a liquid medium.

11. A method of detection of a sulfonamide or of measuring the concentration of a sulfonamide in a liquid medium, the method comprising contacting a sulfonamide sensor according to claim 8 or 9 with the liquid medium.

12. The use according to claim 10, or the method of detection of a sulfonamide or of measuring the concentration of a sulfonamide according to claim 11, wherein the liquid medium is selected from the list consisting in water sample, slurry sample, liquid dung, snow sample, ice sample, milk sample, preferably cow milk, goat milk or sheep milk, and a beverage sample, preferably the liquid medium is a water sample, more preferably selected from the list consisting in water body sample, groundwater sample, mineral water sample, drinkable water sample, tap-water sample, waste water sample such as hospital wastewater sample, treatment plant wastewater sample, sewage water sample, or culture water sample, pipe water sample, tank water sample.

13. The use according to claim 12 or the method of detection of a sulfonamide or of measuring the concentration of a sulfonamide according to claim 12, wherein the water body is selected from the list consisting in sea, ocean, lagoon, bay, gulf, strait, delta, estuary, fjord, river, creek, stream, brook, rill, waterfall, source, spring, drainage basin, lake, pool, pound, puddle, channel, canal, water reservoir, storage pond, impoundment, harbor, glacier, and a wetland such as bog, swamp, marsh, or fen, preferably the water body is selected from the list consisting in river, stream, creek, lake, sea or ocean.

14. The MIP layer coated electrically conductive surface according to anyone of claims 1, 3, 4 or 7, the method for preparing a MIP layer coated electrically conductive surface according to anyone of claim 2 to 6, the sulfonamide sensor according to claim 8 or 9, the use of a sulfonamide sensor according to anyone of claims 10, 12 or 13, or the method of detection of a sulfonamide or of measuring the concentration of a sulfonamide according to anyone of claims 11 to 13, wherein the sulfonamide is an antibiotic sulfonamide, preferably selected from the list consisting of sulfamethizole, sulfisoxazole, sulfanilamide, sulfamethazine, sulfathiazole, sulfadimethoxine, sulfamerazine, sulfacetamide, sulfadiazine, sulfadimidine, sulfafurazole, sulfisomidine, sulfamethoxazole, sulfamoxole, sulfanitran, sulfamethoxypyridazine, sulfamethoxydiazine, sulfadoxine, sulfametopyrazine, terephtyl, sulfafurazole, sulfapyridine, sulfaguanidine, succinylsulfathiazole, phthalysulfathiazole, sulfametomidine, sulfaperin, sulfathiourea, sulfaphenazole, sulfamonomethoxine, derivatives and mixtures thereof, more preferably the sulfonamide is sulfamethizole (SMZ).

15. A method for assessing the pollution of a liquid medium by SMZ, said method comprising the measure of the concentration of SMZ in said liquid medium according to the method of measuring the concentration of SMZ of claim 14, a concentration of SMZ in said liquid medium above the PNEC for SMZ being indicative of a pollution of said culture medium.

FIGURE 1

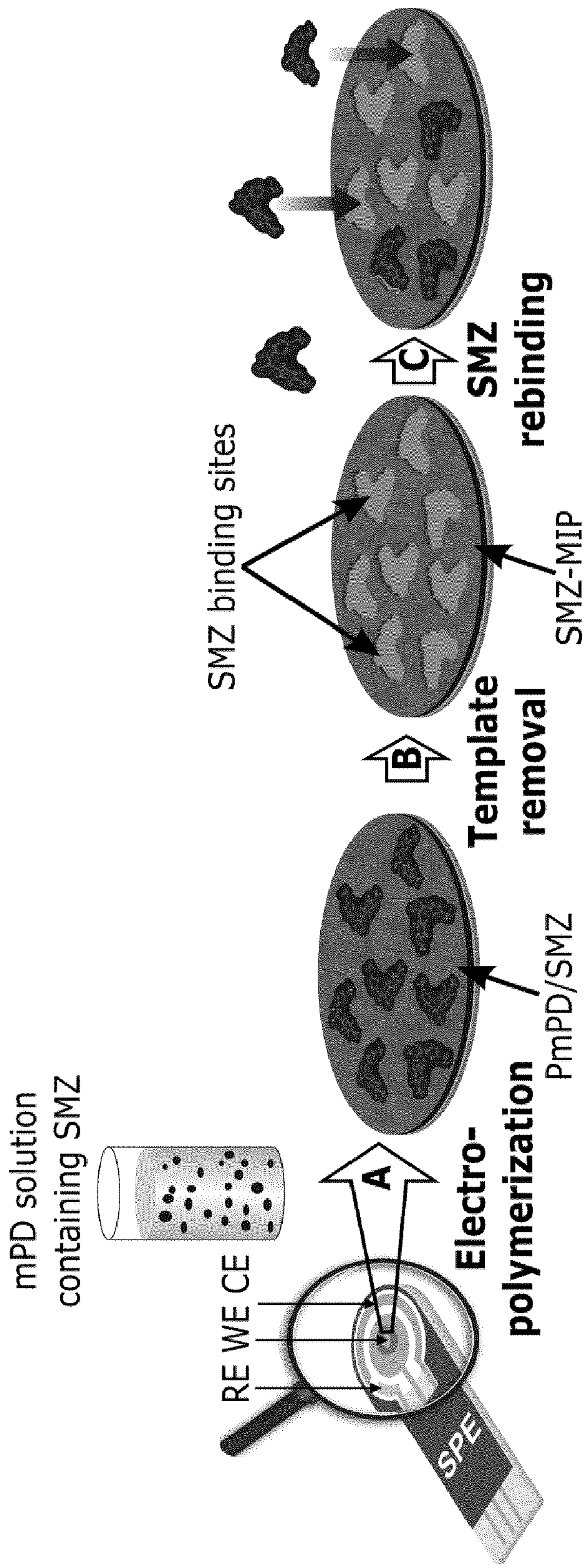
mPD solution
containing SMZ
RE WE CE
SPE
A
Electro-
polymerization
PmPD/SMZ
B
Template
removal
SMZ binding sites
SMZ-MIP
C
SMZ
rebinding

**FIGURE 2**

**A**

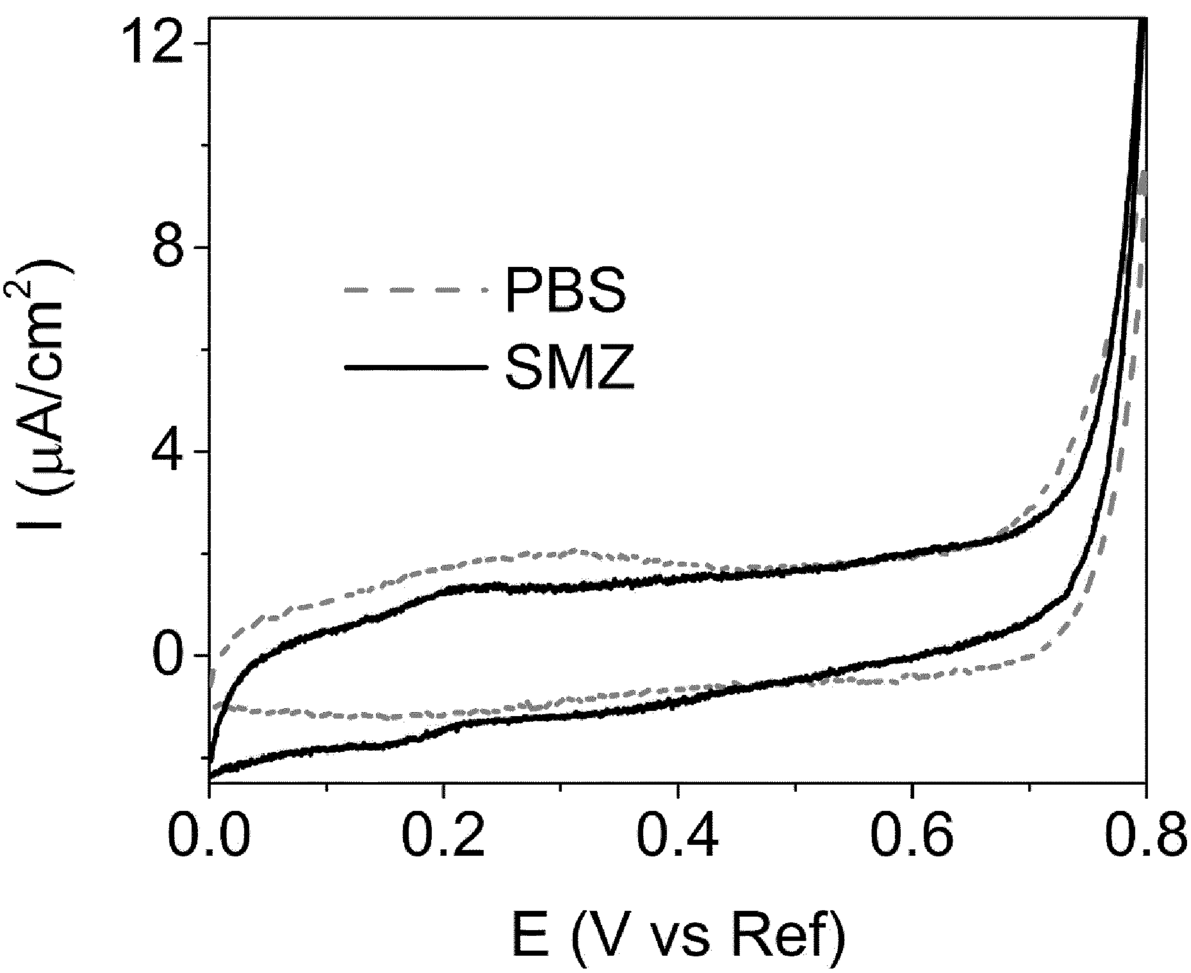

**FIGURE 2 (following)**

**B**

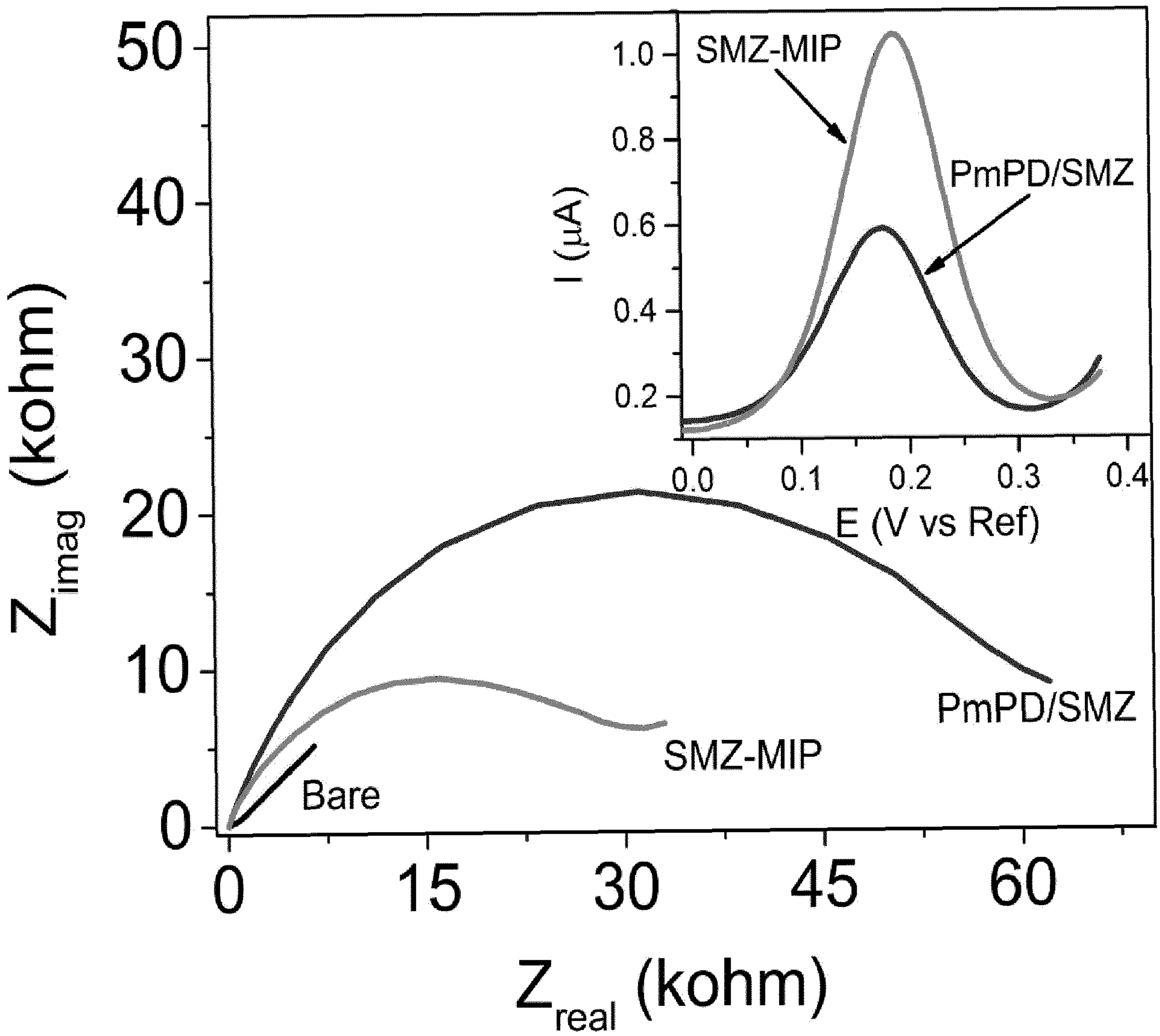

**FIGURE 3**

A

B

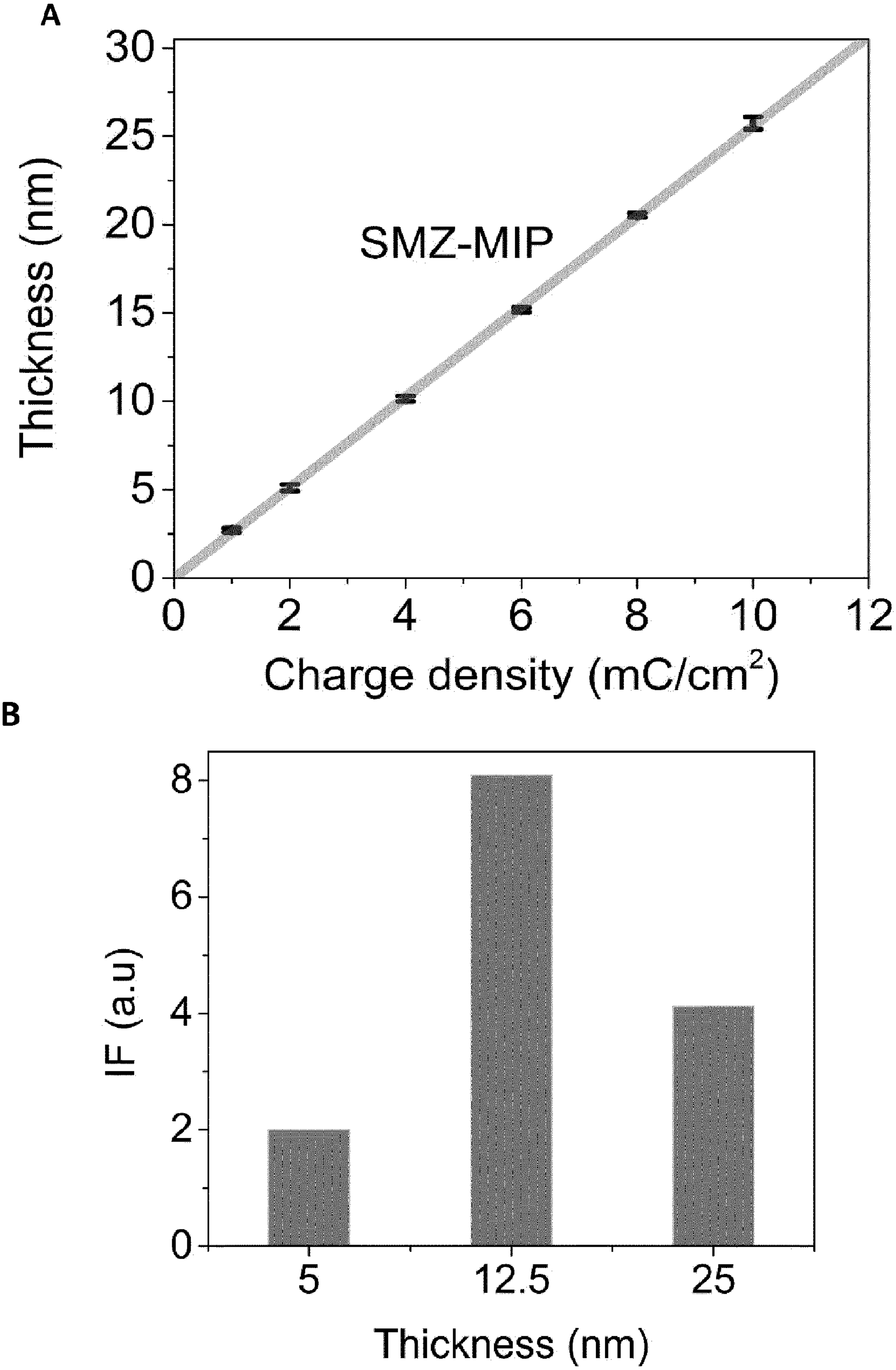

30
25
20
15
10
5
0
Thickness (nm)
SMZ-MIP
0
2
4
6
8
10
12
Charge density (mC/cm2)
8
6
4
2
0
IF (a.u)
5
12.5
25
Thickness (nm)

**FIGURE 4**

A

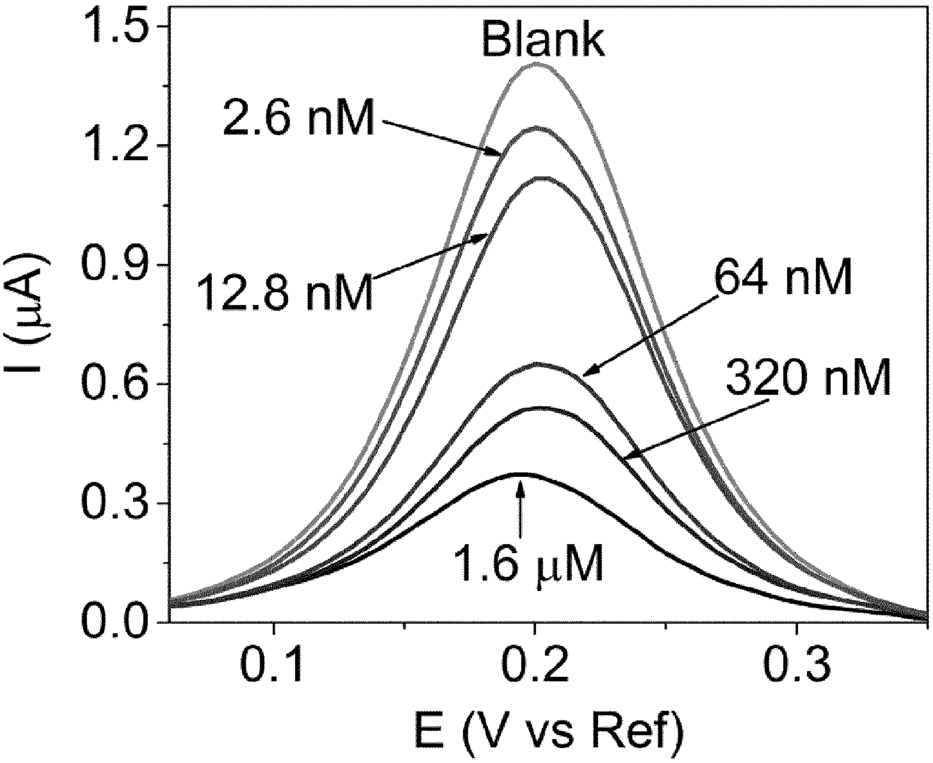
1.5
1.2
0.9
0.6
0.3
0.0
I (μA)
Blank
2.6 nM
12.8 nM
64 nM
320 nM
1.6 μM
0.1
0.2
0.3
E (V vs Ref)

B

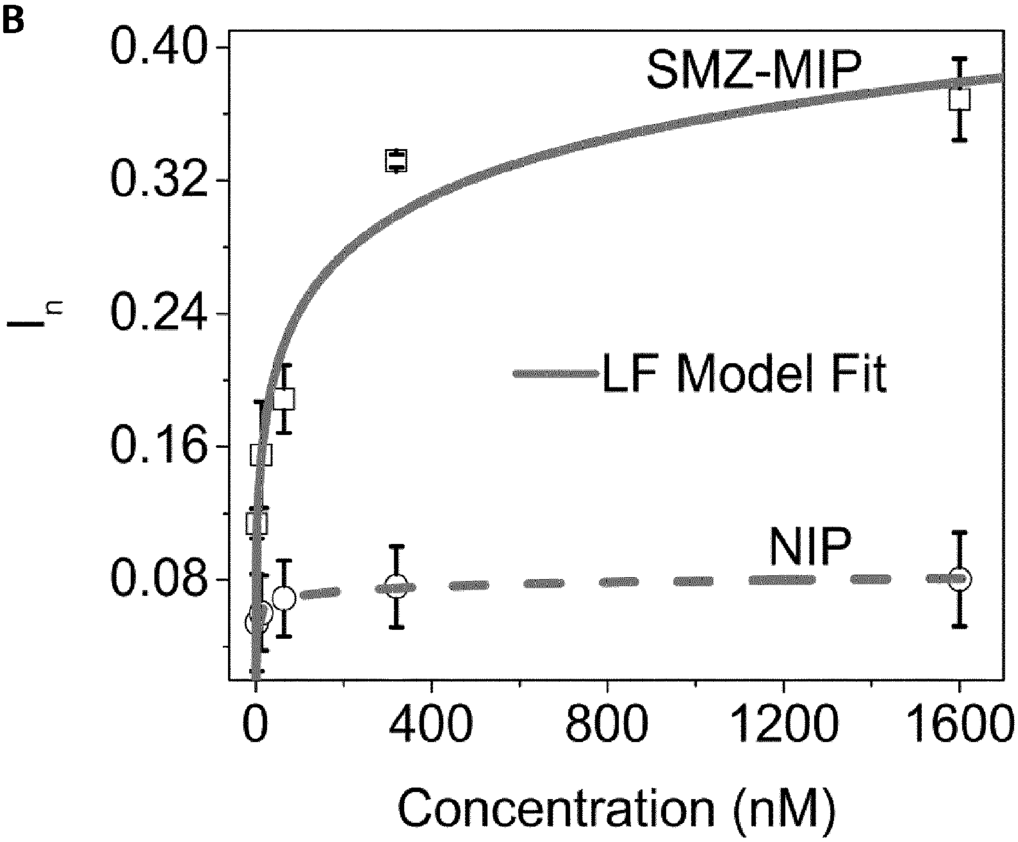
0.40
0.32
0.24
0.16
0.08
I
n
SMZ-MIP
LF Model Fit
NIP
0
400
800
1200
1600
Concentration (nM)

**FIGURE 5**

A

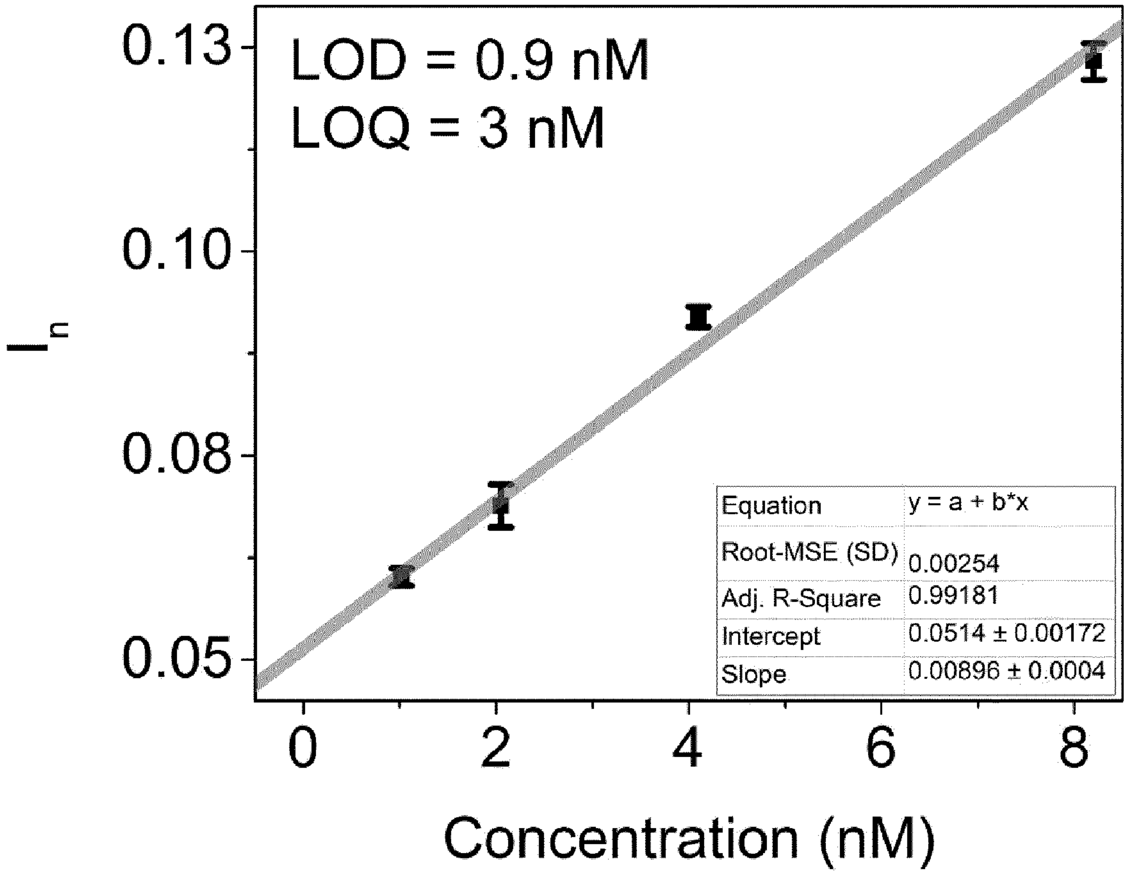
LOD = 0.9 nM
LOQ = 3 nM
Equation y = a + b*x
Root-MSE (SD) 0.00254
Adj. R-Square 0.99181
Intercept 0.0514 ± 0.00172
Slope 0.00896 ± 0.0004
0.13
0.10
0.08
0.05
$I_n$
0
2
4
6
8
Concentration (nM)

B

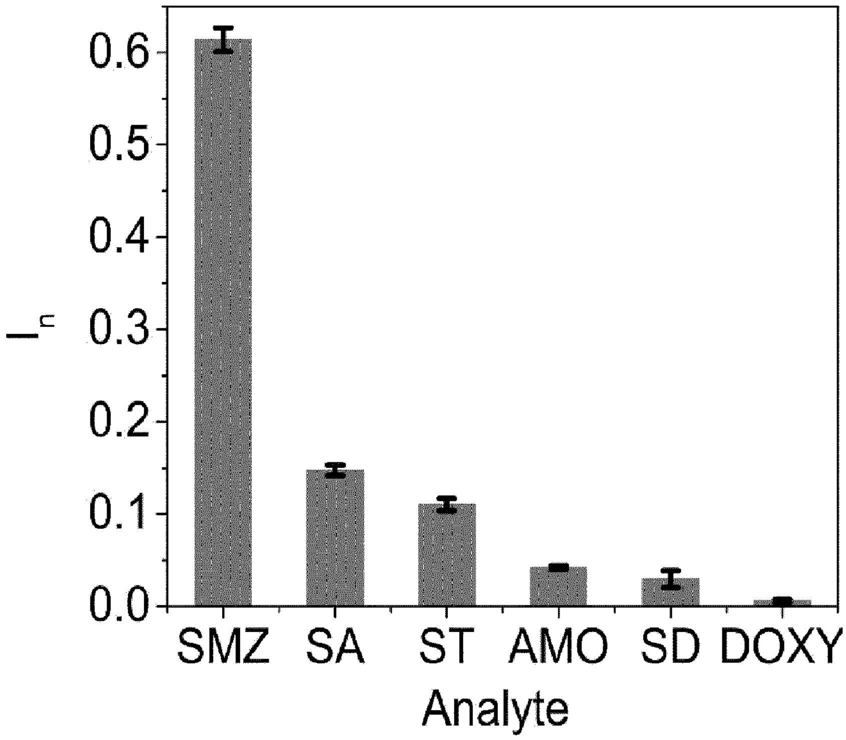
0.6
0.5
0.4
0.3
0.2
0.1
0.0
$I_n$
SMZ
SA
ST
AMO
SD
DOXY
Analyte

Europäisches Patentamt
European Patent Office
Office européen des brevets

# EUROPEAN SEARCH REPORT

Application Number
EP 19 16 7912

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AKINRINADE GEORGE AYANKOJO ET AL: "Molecularly Imprinted Polymer Integrated with a Surface Acoustic Wave Technique for Detection of Sulfamethizole", ANALYTICAL CHEMISTRY, vol. 88, no. 2, 7 January 2016 (2016-01-07), pages 1476-1484, XP055622648, US ISSN: 0003-2700, DOI: 10.1021/acs.analchem.5b04735 * page 1479, right-hand column, paragraphs 2,3 and last paragraph * * page 1480, right-hand column, last two lines and figure 3 * * page 1481, left-hand column, lines 1-6 * * page 1482, right-hand column, last paragraph * * page 1476, abstract * * page 1478, left-hand column, paragraph 2 * ----- | 1-15 | INV. B01J20/26 B01J20/30 G01N27/30 C08G73/02 |
| | | | TECHNICAL FIELDS SEARCHED (IPC) |
| X | A G AYANKOJO ET AL: "Enhancing binding properties of imprinted polymers for the detection of small molecules", PROCEEDINGS OF THE ESTONIAN ACADEMY OF SCIENCES, vol. 67, no. 2, 27 March 2018 (2018-03-27), page 138, XP055622688, ISSN: 1736-6046, DOI: 10.3176/proc.2018.2.04 * page 140, right-hand column, paragraph 2.3 * * page 141, left-hand column; figure 1 * * page 140, right-hand column, paragraph 2.4 - page 141, left-hand column, paragraph 1 * * page 139, right-hand column, last line * ----- -/-- | 1,2, 4-11,14, 15 | B01J G01N C09J C08G B01D |

The present search report has been drawn up for all claims

| Place of search | Date of completion of the search | Examiner |
|---|---|---|
| The Hague | 17 September 2019 | Hilgenga, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

7

Europäisches Patentamt
European Patent Office
Office européen des brevets

# EUROPEAN SEARCH REPORT

Application Number
EP 19 16 7912

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AYANKOJO AKINRINADE GEORGE ET AL: "Molecularly imprinted poly(meta-phenylenediamine) based QCM sensor for detecting Amoxicillin", SENSORS AND ACTUATORS B: CHEMICAL, ELSEVIER BV, NL, vol. 258, 1 December 2017 (2017-12-01), pages 766-774, XP085338543, ISSN: 0925-4005, DOI: 10.1016/J.SNB.2017.11.194 * the whole document * ----- | 1-15 | |
| A | CN 104 001 486 A (UNIV QILU TECHNOLOGY) 27 August 2014 (2014-08-27) * the whole document * ----- | 1-15 | |
| A | PIYUSH S SHARMA ET AL: "Electrochemically synthesized polymers in molecular imprinting for chemical sensing", ANALYTICAL AND BIOANALYTICAL CHEMISTRY, SPRINGER, BERLIN, DE, vol. 402, no. 10, 3 February 2012 (2012-02-03), pages 3177-3204, XP035029165, ISSN: 1618-2650, DOI: 10.1007/S00216-011-5696-6 * the whole document * ----- | 1-15 | TECHNICAL FIELDS SEARCHED (IPC) |
| A | CN 102 768 232 A (UNIV NANJING MEDICAL) 7 November 2012 (2012-11-07) * the whole document * ----- | 1-15 | |
| A | CN 105 080 515 A (ZHEJIANG ACAD AGRICULTURAL SCI) 25 November 2015 (2015-11-25) * the whole document * ----- | 1-15 | |
| | -/-- | | |

The present search report has been drawn up for all claims

| Place of search | Date of completion of the search | Examiner |
|---|---|---|
| The Hague | 17 September 2019 | Hilgenga, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 19 16 7912

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| A | US 2017/227486 A1 (BHANSALI SHEKHAR [US] ET AL) 10 August 2017 (2017-08-10)<br>* the whole document *<br>----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 17 September 2019 | Hilgenga, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

7

page 3 of 3

## ANNEX TO THE EUROPEAN SEARCH REPORT ON EUROPEAN PATENT APPLICATION NO. EP 19 16 7912

This annex lists the patent family members relating to the patent documents cited in the above-mentioned European search report. The members are as contained in the European Patent Office EDP file on
The European Patent Office is in no way liable for these particulars which are merely given for the purpose of information.

17-09-2019

| Patent document cited in search report | Publication date | Patent family member(s) | Publication date |
|---|---|---|---|
| CN 104001486 A | 27-08-2014 | NONE | |
| CN 102768232 A | 07-11-2012 | NONE | |
| CN 105080515 A | 25-11-2015 | NONE | |
| US 2017227486 A1 | 10-08-2017 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **ZHANG T et al.** *Critical Reviews in Environmental Science and Technology,* 2011, vol. 41 (11), 951-998
- **DAVIES J et al.** *Microbiol Mol Biol Rev,* 2010, vol. 74 (3), 417-33
- **JIAN J et al.** *IOP Conf. Series: Earth and Environmental Science,* 2017, vol. 100 (012040
- **K. HAUPT.** *Nature Materials,* 2010, vol. 9, 612-614
- **JIAN J et al.** *IOP Conf. Series: Earth and Environmental Science,* 2017, vol. 100, 012040
- **BOREEN, A. L. et al.** *Environ. Sci. Technol.,* 2004, https://pubs.acs.org/doi/10.1021/es0353053
- **KOLPIN, D. et al.** *Environ. Sci. Technol.,* 2002, https://pubs.acs.org/doi/10.1021/es011055j